# EUROPÄISCHE PATENTSCHRIFT

(11) **EP 3 771 295 B1**
(45) Veröffentlichungstag und Bekanntmachung des Hinweises auf die Patenterteilung: **01.11.2023**
(21) Anmeldenummer: 20187442.7
(22) Anmeldetag: 23.07.2020
(51) Int. Cl.: H05B 47/11, H05B 45/20

(54) **LEUCHTE MIT LICHTFARBENSTEUERUNG**
LIGHT WITH LIGHT COLOUR CONTROL
LUMINAIRE À COMMANDE DE LA COULEUR DE LA LUMIÈRE

(30) Priorität: 24.07.2019 DE 102019119986
(43) Veröffentlichungstag der Anmeldung: 27.01.2021
(73) Patentinhaber: Trilux GmbH & Co. KG, 59759 Arnsberg (DE)
(72) Erfinder: Schneider, Gerald, 59821 Arnsberg (DE); Kirsch, Raphael Matthias, 59494 Soest (DE); Mattala, Thorsten, 58708 Menden (DE); Eversmeyer, Arno, 59556 Lippstadt (DE)
(74) Vertreter: Lippert Stachow Patentanwälte Rechtsanwälte

(56) Entgegenhaltungen:
- EP-A1- 2 566 303
- WO-A1-2015/143469
- DE-A1-102013 008 337
- US-A1- 2016 273 726

## Beschreibung

Die Erfindung betrifft ein Verfahren zum Steuern einer in einem Raum angeordneten Leuchte gemäß dem Oberbegriff von Anspruch 1 sowie eine Steuereinheit gemäß Anspruch 14 und ein System zum Steuern einer Leuchte gemäß Anspruch 15.

Im Stand der Technik gibt es seit Langem Bestrebungen, eine Leuchte, die zum Aussenden von Licht mit verschiedenen Lichtfarben ausgebildet ist, so anzusteuern, dass sie ein für menschliches Empfinden möglichst angenehmes Licht abstrahlt. Diese Bestrebungen haben insbesondere zugenommen, seitdem Leuchten mit LEDs als Lichtquellen Marktreife erlangt haben. Denn LED-Lichtquellen sind einfach steuerbar, und es existieren LED-Lichtquellen, die Licht mit einer jeweils unterschiedlichen Lichtfarbe abstrahlen. Insbesondere sind Leuchten bekannt, bei denen eine warmweiße Lichtquelle, insbesondere LED-Lichtquelle, vorgesehen ist, die mit einer Lichtfarbe bzw. Lichttemperatur von weniger als 3500 K, insbesondere weniger als 3000 K Licht emittiert, sowie eine Lichtquelle, insbesondere LED-Lichtquelle, die Licht mit einer kaltweißen Lichtfarbe emittiert, die insbesondere eine Lichtfarbe bzw. Lichttemperatur von über 5000 K, insbesondere über 5500 K aufweist, wobei besonders bevorzugt bei einer solchen Leuchte die warmweiße Lichtquelle unabhängig von der kaltweißen Lichtquelle steuerbar ist. Die Erfindung bezieht sich im Besonderen auf die Steuerung einer solchen Leuchte. Vorliegend wird, wie in Fachkreisen üblich, die Lichtfarbe über die ihr zugeordnete Lichttemperatur definiert.

Im Stand der Technik ist als ein Ansatz zum Steuern einer Leuchte zum Bereitstellen einer möglichst angenehmen Raumbeleuchtung bekannt, in der Steuerung der Leuchte eine vordefinierte Verlaufskurve der Lichtfarbe abzulegen, die für jeden Tageszeitpunkt eine diesem Tageszeitpunkt zugeordnete Lichtfarbe vorgibt, wobei die Lichtquellen der Leuchte so angesteuert werden, dass die vorgegebene Lichtfarbe von der Leuchte abgestrahlt wird. Diese Ansteuerung kann beispielsweise durch Dimmen der Lichtquellen unterschiedlicher Lichtfarbe erfolgen. Im Stand der Technik wurden bereits ausgiebige Studien durchgeführt, über die festgestellt werden soll, welche Lichtfarbe zu welchem Tageszeitpunkt für einen Menschen als möglichst angenehm empfunden wird, wodurch gemäß den jeweiligen Studien jeweils bestimmte Verlaufskurven definiert wurden, gemäß derer eine Leuchte angesteuert wird. Ziel ist dabei, mit der Leuchte eine Ausleuchtung eines Raums sicherzustellen, die von einem Menschen über einen Tag hinweg, währenddessen er sich in dem Raum aufhält, als möglichst angenehmen empfunden wird. Mit einer wie beschrieben ermittelten und festgelegten Verlaufskurve kann grundsätzlich dem Erreichen des beschriebenen Ziels bereits nahegekommen werden. Allerdings haben neuere Studien festgestellt, dass auch eine solche vorgegebene Verlaufskurve den menschlichen Bedürfnissen nach einer angenehmen Beleuchtung eines Raums nicht vollständig nachgekommen werden kann. Denn zum einen kann eine solche Verlaufskurve nur unzureichend geringfügige, für den Menschen belebend wirkende Lichtfarbenschwankungen realisieren, wie sie bei einem natürlichen Tageslicht auftreten. Zum anderen kann durch eine solche Verlaufskurve nicht verhindert werden, dass eine erhebliche Diskrepanz zwischen der Beleuchtung eines Raums und der tatsächlich außerhalb des Raums in der Natur vorliegenden Beleuchtung besteht, die nachfolgend als "natürliches Tageslicht" bezeichnet wird und an jedem Ort weltweit von der Sonne in Abhängigkeit von der geographischen Lage des Orts und der Wetterlage bestimmt wird. Diesem Problem wurde im Stand der Technik bereits dadurch begegnet, dass Messungen des natürlichen Tageslichts durchgeführt wurden, wonach dann die in einem Raum von einer Leuchte bereitgestellte Beleuchtung mit ihrer Lichtfarbe möglichst nah an die Lichtfarbe des gemessenen natürlichen Tageslichts angepasst wurde. Diese Herangehensweise ist zwar grundsätzlich geeignet, eine Diskrepanz zwischen der Beleuchtung in einem Raum und dem außerhalb des Raums in der Natur vorliegenden natürlichen Tageslicht zu vermeiden. Allerdings sind derzeit bekannte Lichtquellen nur bedingt dazu geeignet, das Leuchtfarbenspektrum des natürlichen Tageslichts exakt abzubilden, so dass bei dem Versuch, die von der Leuchte auszusende Lichtfarbe der natürlichen Tageslichtfarbe nachzuführen, in dem Raum, der mit der Leuchte ausgeleuchtet wird, nur sehr begrenzt einem Menschen ein Lichtgefühl vermittelt werden kann, das dem Lichtgefühl nahekommt, das der Mensch erlebt, wenn er dem natürlichen Tageslicht ausgesetzt ist. Außerdem besteht die weitere Problematik, dass je nach Tageszeit und/oder Wetterlage die Lichtfarbe des natürlichen Tageslichts auch ungeeignet dafür ist, als Vorlage für ein von der Leuchte auszusendendes Licht genutzt zu werden, da mit dieser zu diesen bestimmten Tageszeiten existierenden Lichtfarbe des natürlichen Tageslichts in einem Raum keine günstigen Sichtverhältnisse bzw. Lichtatmosphären geschaffen werden können. Daher ist im Stand der Technik bekannt, bei einer solchen Anpassung des von einer Leuchte in einem Raum emittierten Lichts an das natürliche Tageslicht weitere Anpassungsoptionen für Nutzer vorzusehen, so dass die Nutzer in die von der Leuchte emittierte Lichtfarbe eingreifen können und diese je nach Wünschen und Bedürfnissen im Vergleich zu der gemessenen Lichtfarbe des natürlichen Tageslichts verändern können. So ist beispielsweise bekannt, dass Nutzer nur bestimmte Tageszeitintervalle angeben können, innerhalb derer die Lichtfarbe des von der Leuchte emittierten Lichts in Abhängigkeit von der gemessenen Lichtfarbe des natürlichen Tageslichts eingestellt wird, oder dass Nutzer aktiv die Abhängigkeit der von der Leuchte ausgesandten Lichtfarbe von der gemessenen Lichtfarbe des natürlichen Tageslichts abstellen und stattdessen eine eigene Lichtfarbe vorgeben können, falls das von der Leuchte automatisch ausgestrahlte Licht mit seiner Lichtfarbe als nicht angenehm empfunden wird. Darüber hinaus bringen herkömmliche Verfahren zum Steuern einer in einem Raum angeordneten Leuchte oftmals für einen Nutzer, d. h. einen Menschen, der sich in dem Raum befindet, unangenehme und/oder ungewünschte Lichttemperaturschwankungen mit sich, die oft auch nicht die Lichttemperaturschwankungen wiederspiegeln, die bei natürlichem Tageslicht auftreten und an die ein Mensch somit gewöhnt ist. Die im Stand der Technik bekannten Ausgestaltungen der Verfahren, mit denen eine Leuchte so angesteuert werden kann, dass sie für einen Nutzer in einem Raum ein möglichst angenehmes Licht ausstrahlt, bringen somit verschiedene Nachteile mit sich. Insbesondere ermöglichen sie nur eine unzureichend angenehme Beleuchtung eines Raums und/oder bedingen eine komplizierte Handhabung. Aus DE 10 2013 008 337 A1 ist ein Verfahren zum Steuern einer in einem Raum angeordneten Leuchte bekannt, bei dem innerhalb eines Tageszeitintervalls das Lichtspektrum des von der Leuchte auszusendenden Lichts entsprechend einem gemessenen Lichtspektrum festgelegt wird und außerhalb des Tageszeitintervalls das Lichtspektrum des von der Leuchte auszusendenden Lichts auf ein Soll-Lichtspektrum festgelegt wird. In US 2016/0273726 A1, EP 2 566 303 A1 und WO 2015/143469 A1 sind verschiedene Verfahren zum Steuern einer in einem Raum angeordneten Leuchte offenbart, bei denen das von der Leuchte auszusendende Licht in Abhängigkeit vom gemessenen Tageslicht festgelegt wird.

Der vorliegenden Erfindung liegt als eine Aufgabe zugrunde, ein Verfahren zum Steuern einer in einem Raum angeordneten Leuchte vorzusehen, das zumindest einen der beschriebenen Nachteile gattungsgemäßer Verfahren zumindest teilweise behebt.

Als eine Lösung schlägt die vorliegende Erfindung ein Verfahren mit den Merkmalen von Anspruch 1 vor.

Das erfindungsgemäße Verfahren gemäß Anspruch 1 dient dem Steuern einer in einem Raum angeordneten Leuchte, die zum Aussenden von Licht mit verschiedenen Lichtfarben ausgebildet ist. Bei dem erfindungsgemäßen Verfahren wird eine Lichtfarbe des natürlichen Tageslichts tageszeitabhängig ermittelt und die Lichtfarbe des von der Leuchte auszusenden Lichts in Abhängigkeit von der ermittelten Lichtfarbe des natürlichen Tageslichts eingestellt. Bevorzugt wird die Lichtfarbe über einen Sensor ermittelt, der als Messwert eine Lichttemperatur ausgibt, die die Lichtfarbe charakterisiert. Beispielsweise kann ein solcher Sensor einen Photodioden-Array aufweisen, wobei jeder Photodiode eine bestimmte Lichtfarbe zugeordnet ist und die Anzahl der Photodioden die Auflösung des Lichtfarben-Sensors bestimmt. Beispielsweise kann ein solcher Sensor als eine Kombination aus einem Infrarotsensor und einem Sensor mit einer roten, gelben und blauen Photodiode ausgebildet sein. Dem Fachmann sind verschiedenste Möglichkeiten zur Realisierung eines Lichtfarben-Sensors bzw. Lichttemperatur-Sensors bekannt. Die Einstellung der Lichtfarbe des von der Leuchte auszusendenden Lichts wird in Abhängigkeit von der ermittelten Lichtfarbe des natürlichen Tageslichts vorgenommen, indem die ermittelte Lichtfarbe des natürlichen Tageslichts wie untenstehend erläutert bei der Einstellung der von der Leuchte auszusendenden Lichtfarbe berücksichtigt wird. Besonders bevorzugt wird die Lichtfarbe des von der Leuchte auszusenden Lichts tageszeitabhängig von der ermittelten Lichtfarbe des natürlichen Tageslichts dergestalt eingestellt, dass die zu einer bestimmten aktuellen Tageszeit von der Leuchte auszusendende Lichtfarbe in Abhängigkeit von der ermittelten Lichtfarbe des natürlichen Tageslichts eingestellt wird, die genau zu dieser bestimmten aktuellen Tageszeit ermittelt wird. Es ist jedoch auch möglich, dass ein Zeitversatz zwischen der Tageszeit, an der die Lichtfarbe des natürlichen Lichts ermittelt wird, und der bestimmten aktuellen Tageszeit, zu der die von der Leuchte auszusendende Lichtfarbe in Abhängigkeit von der ermittelten Lichtfarbe des natürlichen Tageslichts eingestellt wird, vorgesehen wird. Beispielsweise kann der Zeitversatz eine kurze Zeit betragen, beispielsweise weniger als 15 Minuten, insbesondere weniger als 5 Minuten, wobei insbesondere die ermittelte Lichtfarbe des natürlichen Tageslichts über ein Tageszeitintervall hin weg gemittelt ermittelt werden kann, wobei dieses Tageszeitintervall zeitlich über den genannten Zeitabstand von der aktuellen Tageszeit beabstandet sein kann, an der die von der Leuchte auszusende Lichtfarbe in Abhängigkeit von der ermittelten Lichtfarbe des natürlichen Tageslichts eingestellt wird. Es ist jedoch auch denkbar, dass die Lichtfarbe über einen Tag hinweg durchgehend ermittelt wird, wobei die von der Leuchte auszusendende Lichtfarbe in Abhängigkeit von der Lichtfarbe des natürlichen Tageslichts eingestellt wird, die an dem vorangegangenen Kalendertag ermittelt wurde, wobei die Tageszeit des Kalendertags, an dem die jeweilige Lichtfarbe des von der Leuchte auszusendenden Lichts eingestellt wird, der Tageszeit des vorangegangenen Kalendertages entspricht, an dem die Lichtfarbe des natürlichen Tageslichts ermittelt wurde. In jedem Fall wird jeweils für einen bestimmten Tageszeitpunkt eine bestimmte, diesem bestimmten Tageszeitpunkt zugeordnete Lichtfarbe des natürlichen Tageslichts ermittelt, wobei die von der Leuchte auszusendende Lichtfarbe an diesem bestimmten Tageszeitpunkt während des als Tag definierten Zeitintervalls in Abhängigkeit von der diesem bestimmten Tageszeitpunkt zugeordneten Lichtfarbe des natürlichen Tageslichts festgelegt wird. Besonders bevorzugt kann die Lichtfarbe über einen Lichtfarben-Sensor ermittelt werden, der mehrere Sensoreinheiten umfasst, die an unterschiedlichen Orten aufgestellt sind und die jeweils die von ihm ermittelten Messwerte betreffend die ermittelte Lichtfarbe an eine zentrale Steuereinheit übermitteln, wobei die Steuereinheit aus den von den einzelnen Sensoreinheiten ermittelten Lichtfarbenwerten die Lichtfarbe des natürlichen Tageslichts ermittelt, beispielsweise durch Mittelung über die Lichtfarben, die von den einzelnen Sensoreinheiten ermittelt wurden. Durch das Vorsehen eines Lichtfarben-Sensors mit mehreren Sensoreinheiten kann besonders vorteilhaft eine lokale Beeinflussung einer Lichtfarben-Messung minimiert werden, beispielsweise eine Beeinflussung, die sich durch an einer lokalen Stelle erfolgte künstliche Beleuchtung oder durch Beschattung ergeben kann. Besonders bevorzugt sind in diesem Ausführungsbeispiel die Sensoreinheiten des Lichtfarben-Sensors innerhalb eines Bereichs von weniger als 1 km², insbesondere weniger als ½ km² angeordnet, damit möglichst präzise eine einem bestimmten geographischen Ort auf der Erde zugeordnete Lichtfarbe tageszeitabhängig ermittelt werden kann, wobei besonders bevorzugt die Leuchte an diesem geographischen Ort in einem Raum benutzt wird und somit die Leuchte so angesteuert wird, dass die von ihr ausgesandte Lichtfarbe in Abhängigkeit von der Lichtfarbe des natürlichen Tageslichts eingestellt wird, das an diesem geographischen Ort vorliegt.

Allgemein kann bevorzugt die Lichtfarbe von einem Sensor ermittelt werden, der sich außerhalb des Gehäuses der Leuchte befindet. Beispielsweise können die von dem Lichtfarben-Sensor ermittelten Werte für die Lichtfarbe des natürlichen Tageslichts über Kommunikationsschnittstellen, insbesondere drahtlose Kommunikationsschnittstellen, zur Steuerung der Leuchte gesandt werden, insbesondere über Internet. Hierdurch kann ermöglicht sein, dass beispielsweise der Lichtfarben-Sensor an einer exponierten Stelle, beispielsweise auf dem Dach eines hohen Gebäudes montiert werden kann, so dass er örtlich entkoppelt von der Leuchte angeordnet ist und somit die Lichtfarbe des natürlichen Tageslichts tageszeitabhängig unabhängig von der Position der Leuchte möglichst korrekt ermittelt werden kann, beispielsweise auch dann, wenn sich die Leuchte in einem Raum in einem Erdgeschoss mit kleinen Fenstern oder in einem Keller befindet.

Erfindungsgemäß wird vor der Durchführung des erfindungsgemäßen Verfahrens in einer Steuerung, die der Leuchte zugeordnet ist, eine Verlaufskurve der Lichtfarbe in Abhängigkeit von der Tageszeit gespeichert, so dass in der Steuerung die Verlaufskurve zur Durchführung des erfindungsgemäßen Verfahrens gespeichert ist. Diese Verlaufskurve der Lichtfarbe gibt somit prädeterminierte Vorgabe-Werte für die Lichtfarbe in Abhängigkeit von der jeweiligen Tageszeit an. Die Verlaufskurve kann beispielsweise vorab durch Studien festgelegt sein, mit denen das Ziel verfolgt wird, einen für das menschliche Empfinden möglichst angenehmen Verlauf der Lichtfarbe über einen Tag hinweg zu ermitteln, beispielsweise wie oben mit Bezug auf gattungsgemäße Verfahren erläutert. Gemäß dem erfindungsgemäßen Vorschlag wird während einer Betriebsphase an jedem Tageszeitpunkt die von der Leuchte auszusendende Lichtfarbe in Abhängigkeit von der zu dem jeweiligen Tageszeitpunkt als Lichtfarbe des natürlichen Tageslichts ermittelten Lichtfarbe festgelegt, wenn der jeweilige Tageszeitpunkt innerhalb eines als Tag festgelegten Zeitintervalls liegt, wobei zwei konkrete Tageszeitpunkte als Anfang und Ende des als Tag festgelegten Zeitintervalls festgelegt werden. Wie weiter unten noch näher ausgeführt, können diese den Anfang und das Ende des als Tag festgelegten Zeitintervalls festgelegten Tageszeitpunkte auf verschiedene Weise bestimmt werden, beispielsweise durch externe Vorgabe von kalibrierten Tagesuhrzeiten oder durch Festlegen eines Tageszeitpunkts von Anfang und Ende des als Tag festgelegten Zeitintervalls als den Zeitpunkt, an dem eine gemessene Intensität des natürlichen Tageslichts einen vorgegebenen Intensitätswert über- bzw. unterschreitet oder die gemessene Lichtfarbe des natürlichen Tageslichts einen Lichtfarbwert über- oder unterschreitet. Allgemein bevorzugt werden Anfang und Ende des als Tag festgelegten Zeitintervalls auf konkrete Tageszeitpunkte festgelegt, die in der Steuerung intrinsisch abgerufen werden, so dass Anfang und Ende nicht durch externe Befehle angezeigt werden. Sowohl zu dem Tageszeitpunkt, der als Anfang des als Tag festgelegten Zeitintervalls festgelegt wurde, als auch zu dem Tageszeitpunkt, der als Ende des als Tag festgelegten Zeitintervalls festgelegt wurde, wird jeweils die Lichtfarbe des natürlichen Tageslichts ermittelt, wobei als diesen bestimmten Tageszeitpunkten zugeordnete Lichtfarbe jeweils ein Lichttemperaturwert des natürlichen Tageslichts ermittelt wird. In Abhängigkeit von dem zu dem Anfang des als Tag festgelegten Zeitintervalls ermittelten Lichttemperaturwert des natürlichen Tageslichts wird ein Tagesanfangslichttemperaturwert festgelegt, der die Lichtfarbe des von der Leuchte an dem Anfang des als Tag festgelegten Zeitintervalls auszusendenden Lichts definiert. In Abhängigkeit von dem zu dem Ende des als Tag festgelegten Zeitintervalls ermittelten Lichttemperaturwert des natürlichen Tageslichts wird ein Tagesendelichttemperaturwert festgelegt, der die Lichtfarbe des von der Leuchte am Ende des als Tag festgelegten Zeitintervalls auszusendenden Lichts definiert. Besonders bevorzugt wird zur Bestimmung des Tagesendelichttemperaturwerts und des Tagesanfangslichttemperaturwerts in Abhängigkeit von den jeweiligen Lichttemperaturwerten des natürlichen Tageslichts jeweils dieselbe Abhängigkeit von dem Lichttemperaturwert des natürlichen Tageslichts verwendet. Besonders bevorzugt wird die Lichttemperatur des von der Leuchte auszusendenden Lichts stets mit derselben Abhängigkeit ausgehend von der ermittelten Lichttemperatur des natürlichen Tageslichts festgelegt. Besonders bevorzugt wird außerhalb des als Tag festgelegten Zeitintervalls die von der Leuchte auszusendende Lichtfarbe in Abhängigkeit von der gespeicherten Verlaufskurve festgelegt. Besonders bevorzugt wird die Abhängigkeit von der gespeicherten Verlaufskurve so an den Tagesanfangslichttemperaturwert und an den Tagesendelichttemperaturwert angepasst, dass die Lichttemperatur der unmittelbar vor dem Anfang des als Tag festgelegten Zeitintervalls in Abhängigkeit von der Verlaufskurve festgelegten, von der Leuchte auszusendenden Lichtfarbe sich um weniger als 1000 K, insbesondere um weniger als 700 K, insbesondere um weniger als 500 K, insbesondere um weniger als 300 K von dem Tagesanfangslichttemperaturwert unterscheidet und dass die Lichttemperatur der unmittelbar nach dem Ende des als Tag festgelegten Zeitintervalls in Abhängigkeit von der Verlaufskurve festgelegten, von der Leuchte auszusendenden Lichtfarbe sich um weniger als 1000 K, insbesondere um weniger als 700 K, insbesondere um weniger als 500 K, insbesondere um weniger als 300 K von dem Tagesendelichttemperaturwert unterscheidet. Die gespeicherte Verlaufskurve gibt somit einen vorbestimmten Verlauf der Lichttemperatur in Abhängigkeit von der Tageszeit an, wobei außerhalb des als Tag festgelegten Zeitintervalls die von der Leuchte auszusendende Lichtfarbe in Abhängigkeit von der gespeicherten Verlaufskurve festgelegt wird. Bevorzugt wird zu einem bestimmten Tageszeitpunkt, der außerhalb des als Tag festgelegten Zeitintervalls liegt, keine diesem bestimmten Tageszeitpunkt zugeordnete ermittelte Lichtfarbe des natürlichen Tageslichts zum Bestimmen der von der Leuchte auszusendende Lichtfarbe verwendet. Bevorzugt wird die von der Leuchte auszusendende Lichtfarbe außerhalb des als Tag festgelegten Zeitintervalls auf Basis der bestimmten Lichtfarbe eingestellt, die für einen mit dem bestimmten Tageszeitpunkt korrelierten, bevorzugt für den bestimmten, Tageszeitpunkt außerhalb des als Tag festgelegten Zeitintervalls von der gespeicherten Verlaufskurve wiedergegeben wird. Beispielsweise kann festgelegt sein, dass über mehr als 50 %, insbesondere mehr als 70 % des Zeitraums, der am Ende des als Tag festgelegten Zeitintervalls beginnt und am Anfang des nächsten als Tag festgelegten Zeitintervalls endet, die von der Leuchte auszusendende Lichtfarbe auf genau die Lichtfarbe eingestellt wird, die der gespeicherten Verlaufskurve entnommen wird. Beispielsweise kann festgelegt sein, dass über ein Zeitintervall festgelegter oder festlegbarer Länge vor dem Anfang des als Tag festgelegten Zeitintervalls und nach dem Ende des als Tag festgelegten Zeitintervalls die von der Leuchte auszusendende Lichtfarbe in Abhängigkeit von der gespeicherten Verlaufskurve festgelegt wird, indem die Lichttemperatur der von der Leuchte auszusendenden Lichtfarbe während des vor dem Anfang des als Tag festgelegten Zeitintervalls liegenden Zeitintervalls ausgehend von einem von der gespeicherten Verlaufskurve vorgegebenen Lichttemperaturwert dem Tagesanfangslichttemperaturwert angenähert wird und/oder während des nach dem als Tag festgelegten Zeitintervalls die Lichttemperatur der von der Leuchte auszusendenden Lichtfarbe ausgehend von dem Tagesendelichttemperaturwert dem von der gespeicherten Verlaufskurve vorgegebenen Lichttemperaturwert angenähert wird. Dabei kann bevorzugt während des vor dem als Tag festgelegten Zeitintervalls liegenden Zeitintervall die Lichttemperatur der von der Leuchte auszusendenden Lichtfarbe ausgehend von dem Lichttemperaturwert, den die gespeicherte Verlaufskurve am Anfang dieses Zeitintervalls vorgibt, dem Tagesanfangslichttemperaturwert angenähert werden, und kann während des nach dem als Tag festgelegten Zeitintervalls liegenden Zeitintervall die Lichttemperatur der von der Leuchte auszusendende Lichtfarbe ausgehend von dem Tagesendelichttemperaturwert dem Lichttemperaturwert angenähert werden, den die gespeicherte Verlaufskurve am Ende dieses Zeitintervalls ausweist. Die Lichtfarbe des von der Leuchte auszusendenden Lichts kann außerhalb des als Tag festgelegten Zeitintervalls somit in funktionaler Abhängigkeit von der gespeicherten Verlaufskurve festgelegt werden, indem in der Steuerung eine Funktion vorgegeben wird, die diese Abhängigkeit definiert, beispielsweise unter Berücksichtigung von Anfang und Ende des als Tag festgelegten Zeitintervalls und unter Berücksichtigung von Tagesanfangslichttemperaturwert und Tagesendelichttemperaturwert. Die Annäherung der Lichttemperatur der von der Leuchte auszusendenden Lichtfarbe an den Tagesanfangslichttemperaturwert bzw. Tagesendelichttemperaturwert innerhalb der erläuterten Zeitintervalle kann beispielsweise dadurch erfolgen, dass zur näherungsweisen Annäherung an den tatsächlich vorliegenden Tagesanfangslichttemperaturwert an einem bestimmten Tag der Lichttemperaturwert verwendet wird, der auf Basis des ermittelten Lichttemperaturwerts des natürlichen Tageslichts zu demselben Tageszeitpunkt, jedoch an einem der vorangehenden Tage, insbesondere einer Serie an vorangehenden Tagen ermittelt wurde. Alternativ kann beispielsweise eine festgelegte Kelvinzahl als realistische Näherung für den Tagesanfangslichttemperaturwert bzw. Tagesendelichttemperaturwert vorgesehen sein, wobei die Kelvinzahl unter Berücksichtigung von Lichttemperaturwerten des natürlichen Tageslichts festgelegt wird, die an dem erwarteten Anfang bzw. Ende des als Intervall festgelegten Tags erwartet werden.

Grundsätzlich gewährleistet die beschriebene Ausführungsform des erfindungsgemäßen Verfahrens somit die Annäherung des unmittelbar vor dem als Tag definierten Zeitintervalls vorgesehenen Lichttemperaturwerts des von der Leuchte auszusendenden Lichts an den Tagesanfangslichttemperaturwert, wobei das Verfahren dazu vorgesehen ist, dass im Hinblick auf den erwarteten Tagesanfangslichttemperaturwert ein Sprung der Lichttemperatur des von der Leuchte auszusendenden Lichts zumindest in der Regel auf weniger als 1000 K reduziert wird, wobei in einigen erfindungsgemäßen Ausführungsformen das Verfahren nicht für jeden denkbaren Extremfall sicherstellt, dass der Sprung unterhalb 1000 K bleibt. In einer Ausführungsform stellt das Verfahren über den Zeitraum von einem Jahr hinweg sicher, dass der Sprung an über 50 %, insbesondere über 70 %, insbesondere über 90 % der Jahrestage des Jahrs unter dem genannten Betrag bleibt. Dies kann beispielsweise durch Charakterisierung des Tagesanfangslichttemperaturwerts über ein Jahr hinweg vor Implementierung des erfindungsgemäßen Verfahrens sichergestellt werden. In einer Ausführungsform des erfindungsgemäßen Verfahrens wird die beschriebene Vermeidung des beschriebenen Sprungs dadurch gewährleistet, dass der unmittelbar vor dem als Tag definierten Zeitintervall vorgesehene Lichttemperaturwert des von der Leuchte auszusendenden Lichts auf einen Wert zwischen 3200 K und 4300 K, bevorzugt zwischen 3300 K und 4000 K eingestellt wird, wobei die Wahl des Werts beispielsweise in Abhängigkeit von der Jahreszeit getroffen werden kann. In einer Ausführungsform wird der Sprung auf den beschriebenen Wert beschränkt, indem für den Tagesangangslichttemperaturwert ein Grenzwertbereich festgelegt wird, der durch den Betrag des maximal zugelassenen Sprungs um den unmittelbar vor dem als Tag definierten Zeitintervall vorgesehenen Lichttemperaturwert des von der Leuchte auszusendenden Lichts festgelegt ist, wobei der Tagesanfangslichttemperaturwert, falls sein in einer festen mathematischen Abhängigkeit von dem natürlichen Tageslicht ermittelter Wert außerhalb des Grenzwertbereichs liegt, auf den entsprechenden Grenzwert festgelegt wird. Die Ausführungen zu dem Anfang des als Tag festgelegten Zeitintervalls sind in einigen Ausführungsformen analog auf das Ende des als Tag festgelegten Zeitintervalls anwendbar. Die erläuterten Zeitintervalle vor bzw. nach dem als Tag festgelegten Zeitintervall können beispielsweise eine Länge von 15 Minuten bis 120 Minuten, insbesondere von 20 Minuten bis 90 Minuten, insbesondere von 30 Minuten bis 60 Minuten aufweisen. Die Festlegung der Lichtfarbe des von der Leuchte auszusendenden Lichts in Abhängigkeit von dem ermittelten Wert der Lichtfarbe des natürlichen Tageslichts kann beispielsweise dergestalt erfolgen, dass der Wert der Lichttemperatur des von der Leuchte auszusendenden Lichts auf den ermittelten Wert der Lichttemperatur des natürlichen Tageslichts festgelegt wird. Beispielsweise kann auch ein funktionaler Zusammenhang festgelegt sein, gemäß dem die Lichttemperatur des von der Leuchte auszusendenden Lichts in Abhängigkeit von dem ermittelten Wert der Lichttemperatur des natürlichen Tageslichts festgelegt wird. Beispielsweise kann eine Stufenfunktion vorgesehen sein, wobei beispielsweise bestimmten ermittelten Werten der Lichttemperatur des natürlichen Tageslichts jeweils korrespondierende bestimmte Werte der Lichttemperatur des von der Leuchte auszusendenden Lichts zugeordnet sind. Beispielsweise kann vorgesehen sein, dass beim Überschreiten eines Grenzwerts für den ermittelten Wert der Lichttemperatur des natürlichen Tageslichts der Wert der Lichttemperatur des von der Leuchte auszusendenden Lichts auf einen vorab festgelegten Maximalwert eingestellt wird. Besonders bevorzugt erfolgt die Steuerung der Leuchte dergestalt, dass als Betriebsphase ein ununterbrochener Zeitraum vorgesehen wird, der sich mindestens über 24 Stunden hinweg erstreckt und der beispielsweise nach einer Inbetriebnahmephase vorgesehen wird. In anderen Ausführungsformen kann die Steuerung der Leuchte auch so erfolgen, dass als Betriebsphase nur ein Abschnitt eines 24-Stunden-Tages gewählt wird und darüber hinaus zumindest ein anderer Abschnitt vorgesehen ist, in dem die Leuchte auf andere Weise gesteuert wird. Indem ein Zeitintervall als Tag festgelegt wird und während dieses Zeitintervalls die von der Leuchte auszusendende Lichtfarbe in Abhängigkeit von der Lichtfarbe des natürlichen Tageslichts festgelegt wird, andererseits jedoch außerhalb dieses als Tag festgelegten Zeitintervalls die Lichtfarbe in Abhängigkeit von der gespeicherten Verlaufskurve eine Lichttemperatur festgelegt wird und darüber hinaus der Übergang zwischen den Zeitintervallen mit der beschriebenen Rückbezugnahme erfolgt, kann eine Leuchte bereitgestellt werden, die zum einen eine für einen Nutzer sehr angenehme Beleuchtung eines Raums ermöglicht und zum anderen dafür ein möglichst geringes Eingreifen eines Nutzer erfordert. Denn hierdurch kann zum einen nach Möglichkeit der Verlauf der Lichtfarbe des natürlichen Tageslichts nachgebildet werden, zum anderen jedoch außerhalb des als Tag festgelegten Zeitintervalls eine sinnvolle von der Leuchte auszusendende Lichtfarbe automatisiert vorgegeben werden, wobei für einen Nutzer unangenehme Lichttemperatursprünge nach Möglichkeit vermieden werden können.

Erfindungsgemäß weist die Lichttemperatur der Lichtfarbe, die als von der Leuchte auszusenden festgelegt ist, außerhalb des als Tag festgelegten Zeitintervalls einen Verlauf in Abhängigkeit von der Tageszeit auf, dessen über ein erstes Zeitintervall gemittelte Steigung und/oder dessen über ein zweites Zeitintervall gemittelte Steigung mehr als das Doppelte, insbesondere mehr als Dreifache, insbesondere mehr als das Fünffache der über einen Zeitraum gemittelten Steigung beträgt, der sich von dem Ende des als Tag festgelegten Zeitintervalls bis zum Anfang des darauffolgenden als Tag festgelegten Zeitintervalls erstreckt, wobei das erste Zeitintervall durch eine unmittelbar vor dem Anfang des als Tag festgelegten Zeitintervalls liegende Stunde festgelegt ist, und das zweite Zeitintervall durch eine unmittelbar nach dem Ende des als Tag festgelegten Zeitintervalls liegende Stunde festgelegt ist. Das erste und das zweite Zeitintervall weisen somit jeweils eine Länge von einer Stunde auf, und die Zeitintervalle liegen jeweils direkt vor dem als Tag festgelegten Zeitintervall bzw. direkt hinter dem als Tag festgelegten Zeitintervall. Indem in diesen Zeitintervallen eine Steigung vorgesehen wird, die, d. h. deren Betrag, wesentlich größer ist als die über den genannten Zeitraum zwischen zwei als Tag festgelegten Zeitintervallen gemittelte Steigung, d. h. deren Betrag, ist, kann in diesen beiden Zeitintervallen ein gezieltes Anpassen der Lichtfarbe, die außerhalb des als Tag festgelegten Zeitintervalls in Abhängigkeit von der gespeicherten Verlaufskurve festgelegt wird, zu der Lichtfarbe, die innerhalb des als Tag festgelegten Zeitintervalls in Abhängigkeit von der Lichtfarbe des natürlichen Tageslichts festgelegt wird, erfolgen. Die Lichttemperatur, auf die die von der Leuchte auszusendende Lichtfarbe außerhalb des als Tag festgelegten Zeitintervalls festgelegt wird, wird dabei bevorzugt stets in Abhängigkeit von der gespeicherten Verlaufskurve festgelegt, wobei die Verlaufskurve in Kombination mit der gewählten Abhängigkeit der Festlegung der von der Leuchte auszusendende Lichtfarbe von dieser Verlaufskurve den erläuterten Verlauf der Lichttemperatur der als von der Leuchte auszusenden festgelegten Lichtfarbe außerhalb des als Tag festgelegten Zeitintervalls bestimmt. Besonders bevorzugt weist die Lichttemperatur der als von der Leuchte auszusenden festgelegten Lichtfarbe außerhalb des als Tag festgelegten Zeitintervalls einen Verlauf in Abhängigkeit von der Tageszeit auf, dessen über ein erstes Zeitintervall, das durch eine unmittelbar vor dem Anfang des als Tag festgelegten Zeitintervalls liegende halbe Stunde festgelegt ist, gemittelte Steigung und/oder dessen über ein zweites Intervall, das durch eine unmittelbar nach dem Ende des als Tag festgelegten Zeitintervalls liegende halbe Stunde festgelegt ist, mehr als das Doppelte, insbesondere mehr als Dreifache, insbesondere mehr als das Fünffache der über einen Zeitraum gemittelten Steigung beträgt, der sich von dem Ende des als Tag festgelegten Zeitintervalls bis zum Anfang des darauffolgenden als Tag festgelegten Zeitintervalls erstreckt. Bei dem Vorsehen einer entsprechend hohen Steigung innerhalb von Zeitintervallen vor und nach dem als Tag festgelegten Zeitintervall, die jeweils nur eine halbe Stunde betragen, kann ein schärferes Verfahren der Lichtfarbe zwischen Tagesanfangslichttemperaturwert bzw. Tagesendelichttemperaturwert und dem jeweiligen Wert, der in Abhängigkeit von der gespeicherten Verlaufskurve vorgegeben ist, erreicht werden.

In einer Ausführungsform wird während des als Tag festgelegten Zeitintervalls die Lichttemperatur der von der Leuchte auszusendenden Lichtfarbe dergestalt in Abhängigkeit von der Lichttemperatur der ermittelten Lichtfarbe des natürlichen Tageslichts festgelegt, dass die Lichttemperatur der von der Leuchte auszusendenden Lichtfarbe durch Addition einer Basislichttemperatur mit einer Variationslichttemperatur ermittelt wird. Bevorzugt beträgt die Basisfarbtemperatur weniger als 4500 K, insbesondere weniger als 4000 K. Besonders bevorzugt entspricht die Variationstemperatur einer um einen prozentualen Faktor reduzierten Differenz zwischen der Basislichttemperatur und der Lichttemperatur der Lichtfarbe des natürlichen Tageslichts. Die Basisfarbtemperatur kann beispielsweise über das als Tag festgelegte Zeitintervall hinweg als konstanter Wert vorgesehen werden oder alternativ innerhalb des als Tag festgelegten Zeitintervalls variiert werden. In jedem Fall gibt die Basislichttemperatur zu einem Tageszeitpunkt innerhalb des als Tag festgelegten Zeitintervalls einen bestimmten Lichttemperaturwert vor, der von dem Lichttemperaturwert des natürlichen Tageslichts abweicht. Indem die von der Leuchte auszusendende Lichttemperatur aus einer Addition von Basislichttemperatur und Variationslichttemperatur gebildet wird, kann von der Leuchte eine Variation der Lichtfarbe in einem Raum erreicht werden, die ein Nutzer als der Variation des natürlichen Tageslichts nachempfunden empfindet. Denn hierdurch ist ermöglicht, dass eine Leuchte mit ihren physikalisch über einen begrenzten Lichttemperaturbereich abstrahlenden Lichtquellen eine für einen Nutzer wahrnehmbare Variation der Lichttemperatur erzeugen kann, die dem Verlauf des natürlichen Tageslichts nachempfunden ist. So sind oftmals nur Lichtquellen verfügbar, die Licht mit einer Farbtemperatur bis zu 6500 K mit einer hinreichenden Energieeffizienz emittieren können. Da die Variation der Lichtfarbe bzw. der Lichttemperatur des natürlichen Tageslichts über einen Tag hinweg in einem sehr großen Lichttemperaturbereich erfolgen kann, beispielsweise zwischen 2500 K und 10000 K, kann eine künstliche Leuchte mit künstlichem Lichtquellen diesen Farbtemperaturbereich nicht vollkommen durchfahren. Die Erfinder haben jedoch erkannt, dass ein Nutzer als bereits sehr angenehm empfindet, wenn die von der Leuchte in einem Raum ausgesandte Lichttemperatur der Lichttemperatur des natürlichen Tageslichts nahekommt und darüber hinaus die Lichttemperatur eine der Variation des natürlichen Tageslichts nachgeführte Variation aufweist. Beispielsweise hat sich als vorteilhaft herausgestellt, die Basislichttemperatur auf einen Wert zwischen 3000 K und 4500 K, insbesondere zwischen 3300 K und 4000 K festzulegen und den prozentualen Faktor, mit dem die Differenz zwischen Basislichttemperatur und zu dem jeweiligen Tageszeitpunkt ermittelter Lichttemperatur der Lichtfarbe multipliziert wird, auf einen Wert zwischen 50 % und 90 %, d. h. zwischen 0,5 und 0,9, insbesondere zwischen 60 % und 80 %, d. h. 0,6 und 0,8, vorzusehen.

In einer Ausführungsform wird immer dann, wenn die zu dem jeweiligen Tageszeitpunkt als Lichtfarbe des natürlichen Tageslichts ermittelte Lichttemperatur um mehr als einen festgelegten Grenzwert geringer ist als ein Wert der Verlaufskurve der Lichttemperatur an dem Tageszeitpunkt, die von der Leuchte auszusendende Lichtfarbe in Abhängigkeit von der Verlaufskurve festgelegt. Somit wird während des als Tag festgelegten Zeitintervalls zunächst lediglich in Abhängigkeit von der als Lichtfarbe des natürlichen Tageslichts ermittelten Lichtfarbe geprüft, ob die Lichttemperatur dieser Lichtfarbe um weniger als einen festgelegten Grenzwert geringer ist als ein Wert der Verlaufskurve der Lichttemperatur an dem Tageszeitpunkt. Sodann wird die von der Leuchte auszusendende Lichtfarbe in Abhängigkeit von der als Lichtfarbe des natürlichen Tageslichts ermittelten Lichtfarbe festgelegt, wenn als eine erste Randbedingung erfüllt, dass die zu dem jeweiligen Tageszeitpunkt als Lichtfarbe des natürlichen Tageslichts ermittelte Lichttemperatur um weniger als einen festgelegten Grenzwert geringer ist als ein Wert der Verlaufskurve der Lichttemperatur an dem Tageszeitpunkt, und wenn als eine zweite Randbedingung erfüllt ist, dass der jeweilige Tageszeitpunkt innerhalb eines als Tag festgelegten Zeitintervalls liegt. Durch die erste Randbedingung ist gewährleistet, dass für den Fall, dass die dem jeweiligen Tageszeitpunkt zugeordnete ermittelte Lichttemperatur des natürlichen Tageslichts zu weit unter der Lichttemperatur der Verlaufskurve liegt, auf die Lichttemperatur der Verlaufskurve zurückgegriffen werden kann, um zu vermeiden, dass eine für ein menschliches Empfinden unangenehm tiefe Lichttemperatur von der Leuchte ausgesandt wird. Die zweite Randbedingung gewährleistet, dass nur über einen als Tag festgelegten Zeitraum hinweg die von der Leuchte auszusendende Lichtfarbe in Abhängigkeit von der ermittelten Lichtfarbe des natürlichen Tageslichts eingestellt wird, um zu vermeiden, dass eine Lichttemperatur, die in der Natur außerhalb eines für einen Menschen als angenehm hell empfundenen Tageszeitraums ermittelt wird, als Grundlage für die Festlegung des von der Leuchte auszusendenden Lichts bzw. dessen Lichtfarbe dient. Somit erfolgt in der Betriebsphase eine Festlegung der Lichtfarbe des von der Leuchte auszusendenden Lichts in Abhängigkeit von der tageszeitabhängig ermittelten Lichtfarbe des natürlichen Tageslichts, indem während des als Tag festgelegten Zeitintervalls die ermittelte Lichtfarbe des natürlichen Tageslichts in ein Verhältnis gesetzt wird mit der Lichtfarbe der gespeicherten Verlaufskurve, wobei die Lichtfarbe des natürlichen Tageslichts als Grundlage für die Einstellung des von der Leuchte auszusendenden Lichts dient, solange der Wert der ermittelten Lichttemperatur des natürlichen Tageslichts um weniger als einen vorab festgelegten Grenzwert geringer ist als der Wert der Verlaufskurve der Lichttemperatur. Beispielsweise kann festgelegt sein, dass die Lichtfarbe des von der Leuchte auszusendenden Lichts nur dann in Abhängigkeit von der ermittelten Lichtfarbe des natürlichen Tageslichts eingestellt wird, wenn der ermittelte Wert nicht geringer ist als der Wert der Verlaufskurve zu dem entsprechenden Tageszeitpunkt, oder beispielsweise, dass der ermittelte Wert der Lichttemperatur des natürlichen Tageslichts um weniger als 15%, insbesondere um weniger als 10 %, insbesondere um weniger als 5 % von dem Wert der Verlaufskurve zu dem entsprechenden Tageszeitpunkt abweicht oder beispielsweise, dass der ermittelte Wert der Lichttemperatur des natürlichen Tageslichts um weniger als 1000 K, insbesondere um weniger als 500 K, insbesondere um weniger als 200 K von dem Wert der Verlaufskurve zu dem entsprechenden Tageszeitpunkt abweicht. Bei der beschriebenen Ausführungsform wird in der Betriebsphase immer dann, wenn nicht beide Randbedingungen erfüllt sind, die von der Leuchte auszusendende Lichtfarbe auf eine von der Verlaufskurve vorgegebene Lichtfarbe festgelegt. Hierdurch ist sichergestellt, dass für den Fall, dass die beiden Randbedingungen nicht erfüllt sind, stets eine sich in Abhängigkeit von der gespeicherten Verlaufskurve ergebende, für den Menschen zu dem jeweiligen Tageszeitpunkt möglichst angenehme, theoretisch festgelegte Lichtfarbe eingestellt wird.

Die beschriebene Ausführungsform bringt weitere Vorteile mit sich. Zum einen ermöglicht die Einstellung der Lichtfarbe des von der Leuchte auszusendenden Lichts in Abhängigkeit von dem ermittelten Wert der Lichtfarbe des natürlichen Tageslichts eine solche Beleuchtung eines Raums mit einer Leuchte, dass die Lichtfarbe dieser Beleuchtung entsprechend dem natürlichen Tageslicht variiert, was für das menschliche Wohlbefinden besonders förderlich sein kann und einen Menschen in dem Raum analog dem natürlichen Tageslicht stimulieren kann. So können beispielsweise Schwankungen der Lichttemperatur, die sich über einen Tag hinweg in der Natur ergeben, über die Beleuchtung in einem Raum nachgefolgt werden. Andererseits kann sichergestellt sein, dass bei solchen Beleuchtungsbedingungen des natürlichen Lichts in der Natur, die für einen Menschen unangenehm sind bzw. eine für den Menschen anstrengende Arbeitsumgebung schaffen, stets eine vorab vorgegebene "Backup"-Lichtfarbe eingestellt wird, die sich aus einer gespeicherten Verlaufskurve ergibt, mit der zumindest theoretisch versucht wird, eine für einen Menschen möglichst angenehme Lichtfarbe vorzugeben, auch wenn diese theoretisch vorgegebene Lichtfarbe selbstverständlich nicht der Variation des natürlichen Tageslichts gleichkommen kann.

In einer Ausführungsform wird das als Tag festgelegte Zeitintervall mittels Messungen des Intensitätswerts des natürlichen Tageslichts bestimmt, wobei ein erster Tageszeitpunkt ermittelt und als erste Uhrzeit festgelegt wird, an dem der gemessene Intensitätswert des natürlichen Lichts einen festgelegten Abendsintensitätswert unterschreitet, und wobei ein zweiter Tageszeitpunkt ermittelt wird und als zweite Uhrzeit festgelegt wird, an dem der gemessene Intensitätswert des natürlichen Lichts einen festgelegten Morgensintensitätswert überschreitet. Bei dem erfindungsgemäßen Verfahren wird somit mit einem Sensor, über den die Intensität des Lichts in der Natur gemessen werden kann, der Intensitätswert des natürlichen Tageslichts bestimmt. Ein solcher Sensor kann, ähnlich wie zu dem oben beschriebenen Lichtfarbe-Sensor, mehrere Sensoreinheiten umfassen. Allgemein ist bei der Erfindung erforderlich, dass ein Zeitintervall als "Tag" festgelegt wird. Diese Festlegung kann beispielsweise durch Vorab-Programmierung eines Zeitzählers, durch Festlegung von festgegebenen Uhrzeiten in einer Funkuhr oder auf andere Weise erfolgen. Bei der beschriebenen besonders vorteilhaften Ausführungsform ist eine besonders einfache Handhabung des Verfahrens und Implementierung des Verfahrens in der Steuerung einer Leuchte ermöglicht, da rein anhand der gemessenen Intensitätswerte und somit auf die lokalen Gegebenheiten bezogen Anfang und Ende des Zeitintervalls, der als Tag festgelegt ist, bestimmt werden können. Besonders bevorzugt wird der Abendsintensitätswert und der Morgensintensitätswert auf einen Wert zwischen 100 Lux und 1000 Lux festgelegt, besonders bevorzugt zwischen 100 Lux und 500 Lux. Besonders bevorzugt wird über einen Zeitraum hinweg der Intensitätswert des natürlichen Tageslichts gemessen und hieraus ein Intensitätswertverlauf des natürlichen Tageslichts, d. h. der Verlauf der Intensität des natürlichen Tageslichts in Abhängigkeit von der Zeit, ermittelt. Als Zeitraum kann beispielsweise eine Zeit von mindestens 12 Stunden, bevorzugt von mindestens 20 Stunden, insbesondere mindestens 24 Stunden festgelegt sein. Anfang und Ende des Zeitraums können beispielsweise auch durch funktionale Abhängigkeiten festgelegt sein, beispielsweise indem Anfang und Ende des Zeitraums darauf festgelegt werden, dass sich der Intensitätswert über eine längere Zeit, insbesondere über mehr als 30 Minuten, weniger als 50 % ändert und unterhalb eines bestimmten Mindestwerts, beispielsweise unter 50 Lux, beispielsweise unter 20 Lux liegt. Der Zeitraum kann selbstverständlich auch unbegrenzt vorgesehen sein, d. h. dass die Messungen der Intensität und somit der Intensitätswertverlauf zu einem bestimmten Zeitpunkt begonnen werden und anschließend nicht mehr unterbrochen werden. Besonders bevorzugt wird ein maximaler gemessener Intensitätswert des über den genannten Zeitraum hinweg ermittelten Intensitätswertverlaufs des natürlichen Tageslichts ermittelt, wobei der Abendsintensitätswert und der Morgensintensitätswert aus einem festgelegten Verhältnis zu dem maximalen gemessenen Intensitätswert ermittelt werden. Beispielsweise kann als Verhältnis festgelegt werden, dass der Abendsintensitätswert und/oder der Morgensintensitätswert 50 % des maximalen gemessenen Intensitätswerts betragen, beispielsweise 20 %, beispielsweise 10 %. Hierdurch kann auf besonders einfache Weise, insbesondere automatisch, ein Zeitintervall als Tag festgelegt werden, der an die jeweiligen lokalen Umgebungen zuverlässig angepasst ist. In einer Ausführungsform wird das als Tag festgelegte Zeitintervall mittels Messung der Lichtfarbe des natürlichen Tageslichts bestimmt, wobei ein dritter Tageszeitpunkt ermittelt und als dritte Uhrzeit festgelegt wird, an dem die gemessene Lichttemperatur des natürlichen Tageslichts einen festgelegten Abendslichttemperaturwert überschreitet, und wobei ein vierter Tageszeitpunkt ermittelt und als vierte Uhrzeit festgelegt wird, an dem die gemessene Lichttemperatur des natürlichen Tageslichts einen festgelegten Morgenslichttemperaturwert überschreitet. Die Erfinder haben erkannt, dass die Lichttemperatur des natürlichen Tageslichts als weitere Möglichkeit dienen kann, Anfang und Ende eines Tages festzulegen. Bekanntermaßen steigt die Lichttemperatur zur "blauen Stunde" am Tagesanfang und am Tagesende erheblich, wodurch über Messung der Lichttemperatur auf einfache und sinnvolle Weise Anfang und Ende eines als Tag festgelegten Zeitintervalls festgelegt werden können. In einer Ausführungsform wird bei dem erfindungsgemäßen Verfahren das als Tag festgelegte Zeitintervall sowohl mittels Messung des Intensitätswerts des natürlichen Tageslichts als auch mittels Messung der Lichtfarbe des natürlichen Tageslichts bestimmt. Bei dieser Ausführungsform kann sich eine besonders zuverlässige sinnvolle Ermittlung von Anfang und Ende des als Tag festgelegten Zeitintervalls ergeben, beispielsweise indem über die jeweils bestimmte erste und dritte Uhrzeit sowie über die zweite und vierte Uhrzeit gemittelt wird zur Festlegung von Anfang und Ende des Zeitintervalls und/oder beispielsweise indem besonders hohe Werte für den Abendslichttemperaturwert und den Morgenslichttemperaturwert festgelegt werden können und bei Nicht-Überschreiten dieser Werte das als Tag festgelegte Zeitintervall über die Messung des Intensitätswerts des natürlichen Tageslichts festgelegt werden kann. In einer anderen erfindungsgemäßen Ausführungsform wird das als Tag festgelegte Zeitintervall nur mittels Messung des Intensitätswerts des natürlichen Tageslichts oder nur mittels Messung der Lichttemperatur des natürlichen Tageslichts bestimmt. Hierdurch kann das Verfahren besonders kostengünstig implementiert werden. Besonders bevorzugt werden Abendslichttemperaturwert und Morgenslichttemperaturwert auf denselben Wert festgelegt. Besonders bevorzugt werden Abendslichttemperaturwert und Morgenslichttemperaturwert jeweils auf einen Wert von mindestens 20.000 K festgelegt. Besonders bevorzugt werden Anfang und Ende des als Tag festgelegten Zeitintervalls nur dann mittels Ermittlung der Lichtfarbe bestimmt, wenn innerhalb von 24 Stunden der Abendslichttemperaturwert und der Morgenslichttemperaturwert überschritten wird, wobei bei dieser Ausführungsform beispielsweise für den Fall, dass dieser jeweilige Wert nicht überschritten wird, Anfang und Ende des als Tag festgelegten Zeitintervalls beispielsweise mittels Messungen des Intensitätswerts oder mittels Bezugnahme auf vorab festgelegte Zeitpunkte erfolgen kann.

In einer Ausführungsform werden während einer Mehrzahl an Kalendertagen jeweils die erste und die zweite Uhrzeit bestimmt und/oder die dritte und die vierte Uhrzeit. Der Anfang des als Tag festgelegten Zeitintervalls wird durch Mittelwertbildung über während der Mehrzahl an Kalendertagen bestimmten ersten Uhrzeiten oder über während der Mehrzahl an Kalendertagen bestimmten dritten Uhrzeiten oder über während der Mehrzahl an Kalendertagen bestimmten ersten und dritten Uhrzeiten festgelegt. Das Ende des als Tag festgelegten Zeitintervalls wird durch Mittelwertbildung über während der Mehrzahl an Kalendertagen bestimmten zweiten Uhrzeiten festgelegt oder während der Mehrzahl an Kalendertagen bestimmten vierten Uhrzeiten festgelegt oder durch Mittelwertbildung über während der Mehrzahl an Kalendertagen bestimmten zweiten und vierten Uhrzeiten festgelegt. Indem Anfang und Ende des Tages durch Mittelwertbildung über erste und/oder dritte bzw. zweite und/oder vierte Uhrzeit über mehrere Kalendertage hinweg ermittelt werden, können Messungenauigkeiten bzw. Messfehler besonders zuverlässig ausgeschlossen werden, die sich beispielsweise aus Wetterbedingungen ergeben können. Besonders bevorzugt werden die genannten Uhrzeiten zur Festlegung von Anfang und Ende des als Tag festgelegten Zeitintervalls für jeden Kalendertag, zu dem Anfang und Ende des als Tag festgelegten Zeitintervalls festzulegen sind, während einer dem jeweiligen Kalendertag vorangehenden Mehrzahl an Kalendertagen bestimmt, wobei für unterschiedliche Kalendertage die Uhrzeiten zur Festlegung von Anfang und Ende des jeweiligen Kalendertages während einer unterschiedlichen Mehrzahl an Kalendertagen bestimmt werden. Dabei kann selbstverständlich für manche unterschiedlichen Kalendertage, insbesondere aufeinanderfolgende unterschiedliche Kalendertage ein identischer Anfang und ein identisches Ende des dem jeweiligen Kalendertages zugeordneten, als Tag festgelegten Zeitintervalls festgelegt sein. Beispielsweise kann festgelegt sein, dass stets über 10 Tage hinweg dieselben Uhrzeiten als Anfang und Ende des als Tag festgelegten Zeitintervalls festgelegt werden und erst nach 10 Tagen Anfang und Ende des als Tag festgelegten Zeitintervalls wieder neu bestimmt werden, beispielsweise über Mittelwertbildung über die Uhrzeiten, die während der 10 vorangehenden Kalendertage ermittelt wurden. Die Mittelwertbildung über die Uhrzeiten, die an mehreren Kalendertagen ermittelt wurden, kann eine noch zuverlässigere sinnvolle Bestimmung von Anfang und Ende des als Tag festgelegten Zeitintervalls ermöglichen.

In einer Ausführungsform wird die jeweils aktuelle Tageszeit in der Steuerung anhand eines Zeitzählers bestimmt, der die jeweils aktuelle Tageszeit durch Zeitzählung ausgehend von einem Tageszeitreferenzwert bestimmt. Beispielsweise kann hierfür in der Steuerung ein Clock-Modul vorgesehen sein. Der Tageszeitreferenzwert kann beispielsweise einmalig einprogrammiert werden oder aus den Uhrzeiten, über die Anfang und Ende eines als Tag festgelegten Zeitintervalls festgelegt werden, bestimmt werden. Besonders bevorzugt wird der Tageszeitreferenzwert aus dem gemessenen Verlauf des Intensitätswertes des natürlichen Tageslichts und/oder aus dem gemessenen Verlauf der Lichttemperatur des natürlichen Tageslichts in der Steuerung selbst bestimmt. Besonders bevorzugt wird über den Tageszeitreferenzwert auch die Zeitposition der vorab festgelegten Verlaufskurve bestimmt, so dass über den Zeitzähler im Zusammenspiel mit der Festlegung des Tageszeitreferenzwertes festgelegt wird, was in der Steuerung als aktuelle Tageszeit gilt, so dass somit der Punkt auf der Verlaufskurve festgelegt ist.

Besonders bevorzugt gibt die Verlaufskurve der Lichttemperatur Werte für die Lichttemperatur an, die während des als Tag festgelegten Zeitintervalls mit der Tageszeit variieren. Besonders bevorzugt gibt die Verlaufskurve der Lichtfarbe Werte für die Lichttemperatur an, die sowohl während des als Tag festgelegten Zeitintervalls mit der Tageszeit variieren als auch außerhalb des als Tag festgelegten Zeitintervalls mit der Tageszeit variieren. Indem die Verlaufskurve nicht konstant auf einem bestimmten Wert bleibt, kann auf die menschlichen Bedürfnisse besonders vorteilhaft eingegangen werden. Dabei haben die Erfinder festgestellt, dass es besonders vorteilhaft ist, wenn die Werte der Lichttemperatur der Verlaufskurve auch außerhalb des als Tag festgelegten Zeitintervalls in Abhängigkeit von der Tageszeit variieren. Besonders bevorzugt variieren die Werte für die Lichttemperatur über den Verlauf der Verlaufskurve hinweg, insbesondere innerhalb und/oder außerhalb des als Tag festgelegten Zeitintervalls, um mindestens 10 % ausgehend von der maximalen Lichttemperatur.

In einer Ausführungsform wird während einer Inbetriebnahmephase der Leuchte die von der Leuchte auszusendende Lichtfarbe ohne Berücksichtigung der von der Verlaufskurve vorgegebene Abhängigkeit der Lichtfarbe festgelegt, wobei die Betriebsphase erst begonnen wird, wenn in der Steuerung Anfang und Ende des als Tag festgelegten Zeitintervalls definiert sind. Diese Ausführungsform kann eine besonders einfache Durchführung des Verfahrens, insbesondere die autarke bzw. automatische Durchführung des Verfahrens einer Steuerung in einer Leuchte ermöglichen, da unabhängig von dem geographischen Ort, in der sich die Leuchte befindet, während der Inbetriebnahmephase beispielsweise ein konstanter Wert für die Lichttemperatur festgelegt sein kann, und erst nach Feststellung, was bei dem konkreten geographischen Ort als "Tag" gilt, mit einer Variation der Lichttemperatur begonnen wird, die für einen Menschen als angenehm empfunden wird, der sich an dem bestimmten geographischen Ort aufhält. Besonders bevorzugt werden Anfang und Ende des als Tag festgelegten Zeitintervalls durch die Steuerung selbst ermittelt. Eine Ermittlung durch die Steuerung selbst bedeutet, dass keine Programmierung, d. h. externe Festlegung erforderlich ist, sondern dass die Steuerung selbsttätig, d. h. ohne menschliches Eingreifen, Anfang und Ende des als Tag festgelegten Zeitintervalls bestimmt. In einer Ausführungsform werden die Lichtfarbe und Intensität des natürlichen Tageslichts mittels zumindest eines räumlich von einem Leuchtengehäuse der Leuchte entfernten Sensors gemessen. Selbstverständlich kann ein Sensor für die Lichtfarbenmessung und ein Sensor für die Intensitätsmessung vorgesehen sein, besonders bevorzugt ist ein Sensor vorgesehen, der sowohl Lichtfarbe als auch Intensität des natürlichen Tageslichts messen kann. Besonders bevorzugt werden ausgehend von dem zumindest einen Sensor als Messdaten Werte für die Lichttemperatur und für die Intensität des natürlichen Tageslichts über eine Datenverbindung, insbesondere eine drahtlose Datenverbindung, an die Steuerung übermittelt. Besonders bevorzugt werden die Messdaten in einer Datenbank abgelegt und von der Steuerung über die Datenverbindung abgerufen. Besonders bevorzugt kann der Sensor bzw. können die Sensoren mehrere Sensoreinheiten umfassen, die an unterschiedlichen geographischen Punkten aufgestellt sind, wobei hierdurch über Mittelwertbildung über mehrere Sensoreinheiten Lichtfarbe und Intensität des natürlichen Tageslichts an einem bestimmten geographischen Ort bestimmt werden können. In einer Ausführungsform wird das Verfahren an einem geographischen Ort durchgeführt, d. h. bezogen auf eine Leuchte durchgeführt, die an einem bestimmten geographischen Ort aufgestellt ist, wobei zur beschriebenen Steuerung der Leuchte Werte für die Lichttemperatur und/oder Intensität des natürlichen Tageslichts verwendet werden, die an einem anderen geographischen Ort ermittelt wurden. Hierdurch kann beispielsweise einem Menschen, der sich an einem bestimmten geographischen Ort befindet, suggeriert werden, dass er sich an einem anderen geographischen Ort befindet. Dies kann beispielsweise zur Vermeidung von Jetlag bei kurzfristigem Ortswechsel hilfreich sein. In einer Ausführungsform sind mehrere Gruppen an Sensoren vorgesehen, wobei jeder Gruppe an Sensoren ein bestimmter Ort zugeordnet wird und in der Datenbank für jeden Ort ein Datensatz aus Messdaten abgelegt wird, die von der dem jeweiligen Ort zugeordneten Gruppe an Sensoren gemessen wurden. Als Ort ist ein bestimmter geographischer Ort, d. h. eine bestimmte geographische Position auf der Erde gemeint. Besonders bevorzugt wird der Leuchte ein bestimmter Ort zugeordnet, wobei die von der Leuchte auszusendende Lichtfarbe in Abhängigkeit von den Messdaten festgelegt wird, die von der diesem Ort zugeordneten Gruppe an Sensoren gemessen wurden.

Die Erfindung bezieht sich ferner auf eine Steuereinheit umfassend einen Speicher und einen Prozessor sowie zumindest eine erste Schnittstelle zum Empfangen von Daten, die die Lichtfarbe des natürlichen Tageslichts kennzeichnen, und eine zweite Schnittstelle zum Ausgeben von Ansteuerungsdaten zur Steuerung der Leuchte, wobei die Steuereinheit dazu eingerichtet ist, das erfindungsgemäße Verfahren durchzuführen, beispielsweise indem in dem Speicher die hierzu eingerichtete Software gespeichert ist. Die Schnittstellen können beispielsweise herkömmliche kabelgeführte Schnittstellen oder Drahtlosschnittstellen sein. Beispielsweise kann eine der beiden Schnittstellen und/oder eine weitere Schnittstelle der Steuereinheit dazu ausgebildet sein, dass über diese Schnittstelle eine Programmierung der Steuereinheit erfolgen kann, beispielsweise zum Ablegen der gespeicherten Verlaufskurve in dem Speicher und/oder zum Programmieren der genannten Abhängigkeiten der von der Leuchte auszusendenden Lichtfarbe, beispielsweise der genannten Abhängigkeiten der von der Leuchte auszusendenden Lichtfarbe von der Verlaufskurve und/oder von dem Tagesanfangslichttemperaturwert und/oder dem Tagesendelichttemperaturwert und/oder während des als Tag festgelegten Zeitintervalls von der Lichtfarbe des natürlichen Tageslichts, wobei bevorzugt diese Schnittstelle als Drahtlosschnittstelle ausgebildet ist. Beispielsweise kann die Steuereinheit in einem Betriebsgerät implementiert sein, wobei die Steuereinheit über die Ansteuerungsdaten festlegt, wie das Betriebsgerät die Lichtquellen einer Leuchte versorgt, beispielsweise mit welchem Versorgungsstrom das Betriebsgerät Lichtquellen der Leuchte versorgt, die jeweils Licht in einer bestimmten, ihnen jeweils zugeordneten Lichtfarbe aussenden. Beispielsweise kann die Steuereinheit als Adapter ausgebildet sein, der an ein Betriebsgerät einer Leuchte anschließbar ist zum Ausgeben der Ansteuerdaten an das Betriebsgerät. Bevorzugt weist die Steuereinheit einen Zeitgeber, beispielsweise ein Clock-Modul oder eine Echtzeituhr auf, über die die Zeitabhängigkeit der von der Steuereinheit ausgegebenen Ansteuerungsdaten definiert ist. Ein Ausführungsbeispiel der Erfindung bezieht sich ferner auf eine Leuchte mit der Steuerung, die dazu ausgebildet ist, das Verfahren gemäß einem der vorangehenden Ansprüche durchzuführen. Bei der erfindungsgemäßen Leuchte ist somit das erfindungsgemäße Verfahren gemäß einer der oben beschriebenen Ausführungsformen implementiert, beispielsweise indem die Leuchte eine erfindungsgemäße Steuereinheit aufweist. Die Erfindung bezieht sich ferner auf ein System zum Steuern einer Leuchte, wobei das System mehrere Gruppen an Sensoren und eine Datenbank umfasst. Jeder Gruppe an Sensoren ist ein bestimmter Ort zugeordnet, und die Sensoren sind mit der Datenbank verbunden zum Ausgeben der von ihnen gemessenen Messdaten zum Erzeugen eines Datensatzes aus Messdaten für jeden Ort. Der Leuchte wird ein bestimmter Ort zugeordnet, und die von der Leuchte auszusendende Lichtfarbe wird auf Basis des für diesen bestimmten Ort erzeugten Datensatzes gemäß den Ausführungsformen des oben beschriebenen erfindungsgemäßen Verfahrens festgelegt.

Die Erfindung wird nachfolgend unter Bezugnahme auf drei Figuren anhand eines Ausführungsbeispiels näher erläutert. Es zeigen:
- Figur 1:: Lichttemperaturverläufe zur Erläuterung einer Ausführungsform eines erfindungsgemäßen Verfahrens;
- Figur 2:: verschiedene Verläufe der Lichttemperatur;
- Figur 3:: den Verlauf der Lichttemperatur des Lichts, das von einer Ausführungsform einer erfindungsgemäßen Leuchte über einen bestimmten Tag hinweg abgestrahlt wird;
- Figur 4:: den Verlauf der Lichttemperatur des Lichts, das von einer Ausführungsform einer erfindungsgemäßen Leuchte über einen anderen bestimmten Tag hinweg abgestrahlt wird.

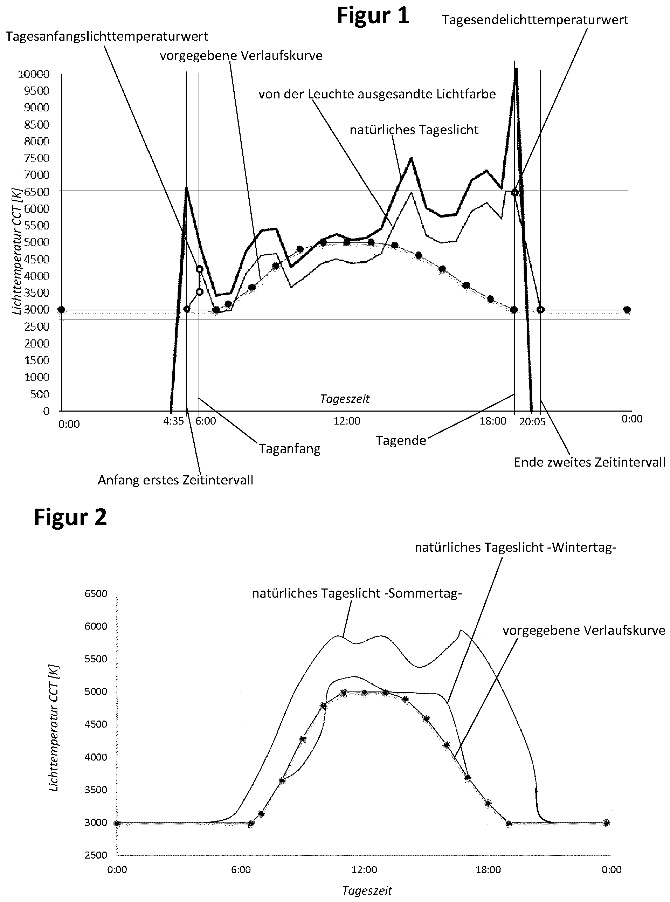

In Figur 1 sind verschiedene Lichttemperaturverläufe zur Erläuterung einer Ausführungsform eines erfindungsgemäßen Verfahrens gezeigt. In Figur 1 ist sowohl mit dem Begriff "Taganfang" der als Anfang des als Tag festgelegten Zeitintervalls festgelegte konkrete Tageszeitpunkt angegeben sowie mit dem Begriff "Tagende" der als Ende des als Tag festgelegten Zeitintervalls festgelegte konkrete Tageszeitpunkt angegeben. Ferner sind in Figur 1 zum einen beispielhaft eine gespeicherte Verlaufskurve der Lichttemperatur sowie beispielhaft der Lichttemperaturverlauf des natürlichen Tageslichts sowie für eine erfindungsgemäße Ausführungsform beispielhaft der Lichttemperaturverlauf des von einer Leuchte ausgesandten Lichts, die mit einer Ausführungsform eines erfindungsgemäßen Verfahrens gesteuert wird, gezeigt. Aus Figur 1 ist ersichtlich, dass die gespeicherte Verlaufskurve der Lichttemperatur über einen bestimmten Tageszeitraum hinweg eine erhebliche Variation aufweist und über einen anderen Tageszeitraum hinweg, in dem es außerhalb eines Raums üblicherweise recht dunkel ist, konstant ist. Ferner ist in Figur 1 zu erkennen, dass die Lichttemperatur des natürlichen Tageslichts über einen Tag hinweg eine ganz erhebliche Variation aufweist. Außerdem ist zu erkennen, dass die von der Leuchte ausgesandte Lichtfarbe durch die physikalischen Möglichkeiten ihrer Lichtquellen begrenzt ist. Diese Möglichkeiten sind vorliegend durch zwei "Grenzwertbalken" eingezeichnet, die bei 2700 K bzw. 6500 K liegen. Bei der in Figur 1 gezeigten Ausführungsform des erfindungsgemäßen Verfahrens wird während des als Tag festgelegten Zeitintervalls die Lichttemperatur der von der Leuchte auszusendenden Lichtfarbe dergestalt in Abhängigkeit von der Lichttemperatur der ermittelten Lichtfarbe des natürlichen Tageslichts festgelegt, dass die Lichttemperatur der von der Leuchte auszusendenden Lichtfarbe durch Addition einer Basislichttemperatur von 3500 K mit einer Variationslichttemperatur ermittelt wird, wobei die Variationslichttemperatur der Multiplikation von der Differenz zwischen Basislichttemperatur und der Lichttemperatur der Lichtfarbe des natürlichen Tageslichts mit einem Skalierungsfaktor von 0,7 entspricht. Ferner ist bei dem beschriebenen Ausführungsbeispiel vorgesehen, dass die Lichttemperatur der von der Leuchte auszusendenden Lichtfarbe in einem ersten Zeitintervall, das eine Länge von einer Stunde aufweist und unmittelbar vor dem Anfang des als Tag festgelegten Zeitintervalls liegt, ausgehend von der gespeicherten Verlaufskurve vorgegebenen Lichttemperatur zu der zum Anfang des als Tag festgelegten Zeitintervalls in Abhängigkeit von der Lichtfarbe des natürlichen Tageslichts festgelegten Lichttemperatur hin angenähert wird. An dem Anfang des als Tag festgelegten Zeitintervalls erfolgt lediglich ein Sprung von ca. 600 K ausgehend von dem am Ende des ersten Zeitintervalls in Abhängigkeit von der Verlaufskurve vorgegebenen Lichttemperaturwert der von der Leuchte auszusendenden Farbe zu dem Tagesanfangslichttemperaturwert. Vorliegend wird die von der Leuchte während des ersten Zeitintervalls ausgesandte Lichtfarbe dergestalt in Abhängigkeit von der Verlaufskurve festgelegt, dass ausgehend von dem in Abhängigkeit von der Verlaufskurve am Anfang des ersten Zeitintervalls festgelegten Lichttemperaturwert eine lineare Gerade zu einem Endwert gefahren wird, der nahe an dem erwarteten Tagesanfangslichttemperaturwert liegt. Unmittelbar nach dem Ende des ersten Zeitintervalls beginnt das als Tag festgelegte Zeitintervall. Ferner ist ein zweites Zeitintervall vorgesehen, das unmittelbar nach dem Ende des als Tag festgelegten Zeitintervalls liegt und eine Länge von einer Stunde aufweist, wobei die Lichttemperatur des von der Leuchte auszusendenden Lichts ausgehend von der Lichttemperatur, die am Ende des als Tag festgelegten Zeitintervalls in Abhängigkeit von der Lichttemperatur des natürlichen Tageslichts als von der Leuchte auszusendende Lichttemperatur festgelegt ist, der Lichttemperatur angenähert wird, die außerhalb des als Tag festgelegten Zeitintervalls in Abhängigkeit von der gespeicherten Verlaufskurve festgelegt wird. Dabei wird ausgehend von dem Tagesendelichttemperaturwert eine lineare Gerade zu dem Lichttemperaturwert gefahren, der am Ende des zweiten Zeitintervalls in Abhängigkeit von der Verlaufskurve festgelegt ist. Das zweite Zeitintervall beginnt dabei unmittelbar nach dem Ende des als Tag festgelegten Zeitintervalls.

Aus Figur 1 ist ersichtlich, dass die beschriebene Ausführungsform des erfindungsgemäßen Verfahrens in mehrerlei Hinsicht vorteilhaft ist. Zum einen werden bei dieser Ausführungsform unerwünschte Sprünge der Lichtfarbe des von der Leuchte ausgesandten Lichts vermieden. Zum anderen wird die von der Leuchte ausgesandte Lichtfarbe sowohl von ihrem Betrag her an die Lichtfarbe des natürlichen Tageslichts angenähert als auch von ihrem Variationsverhalten her, ohne dass die physikalische Begrenzung der Lichtquellen der Leuchte die Wahrnehmung des Nutzers negativ beeinflussen.

In Figur 2 sind Beispiele für Verlaufskurven der Lichttemperatur angegeben. In Figur 2 ist ein Beispiel für den Verlauf der Lichttemperatur des natürlichen Tageslichts an einem Sommertag angegeben, der von einem Lichttemperatur-Sensor gemessen wurde. Außerdem ist in Figur 2 ein Beispiel für den Verlauf der Lichttemperatur des natürlichen Tageslichts an einem Wintertag angegeben, der von einem Lichttemperatur-Sensor gemessen wurde. Außerdem ist in Figur 2 ein Beispiel für eine vorgegebene Verlaufskurve angegeben, die in der Steuerung einer erfindungsgemäßen Leuchte gespeichert sein kann. Die Verläufe der Lichttemperatur an dem Sommertag und an dem Wintertag sind jeweils nur über einen bestimmten Zeitraum hinweg dargestellt. Die Verlaufskurve ist über einen vollständigen Kalendertag, d. h. über 24 Stunden dargestellt. Allgemein erfindungsgemäß vorteilhaft ist in der Steuerung hinterlegt, dass die Verlaufskurve alle 24 Stunden identisch wiederholt wird.

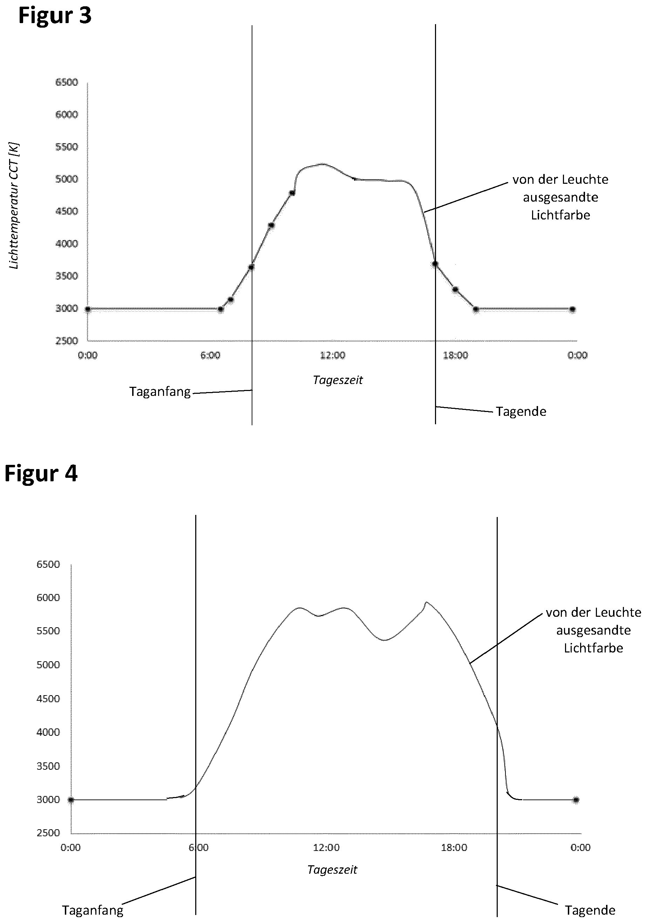

In den Figuren 3 und 4 sind Beispiele für eine Verlaufskurve der Lichttemperatur des Lichts dargestellt, das von einer Ausführungsform einer erfindungsgemäßen Leuchte, die mit einer Ausführungsform eines erfindungsgemäßen Verfahrens angesteuert wird, über 24 Stunden hinweg abgestrahlt wird, falls diese in Betrieb ist. Bei der Ausführungsform des erfindungsgemäßen Verfahrens, auf die in den Figuren 2 und 3 Bezug genommen wird, wird dann, wenn die zu dem jeweiligen Tageszeitpunkt als Lichtfarbe des natürlichen Tageslichts ermittelte Lichttemperatur um mehr als einen festgelegten Grenzwert geringer ist als ein Wert der Verlaufskurve der Lichttemperatur an dem Tageszeitpunkt, die von der Leuchte auszusendende Lichtfarbe in Abhängigkeit von der Verlaufskurve festgelegt. In Figur 3 ist Bezug genommen auf den in Figur 2 dargestellten Wintertag. Aus der Zusammenschau von Figur 2 und Figur 3 ist ersichtlich, dass die Lichttemperatur des natürlichen Tageslichts an dem Wintertag erheblich variiert und nur über ein kurzes Zeitintervall hinweg hohe Werte annimmt. Bei der beschriebenen Ausführungsform wurden Anfang und Ende des als Tag festgelegten Zeitintervalls mittels Intensitätsmessung festgelegt. Hieraus ergeben sich die in Figur 3 als Taganfang und Tagende eingezeichneten Grenzwerte. Aus Figur 3 in Zusammenschau mit Figur 2 ergibt sich, dass die Lichttemperatur des von der Leuchte auszusendenden Lichts innerhalb des als Tag festgelegten Zeitintervalls in Abhängigkeit von der gemessenen Lichttemperatur des natürlichen Tageslichts festgelegt wird. Dabei wird die Lichttemperatur des von der Leuchte auszusendenden Lichts auf den Wert des natürlichen Tageslichts festgelegt, solange dieser Wert mindestens dem Wert entspricht, der zu der jeweils aktuellen Tageszeit von der vorgegebenen Verlaufskurve festgelegt ist. Sobald die gemessene Lichttemperatur des natürlichen Tageslichts unter den jeweiligen Wert der vorgegebenen Verlaufskurve fällt, wird auf die vorgegebene Verlaufskurve zurückgegriffen, so dass gemäß dem in Figur 3 dargestellten Ausführungsbeispiel das von der Leuchte ausgesandte Licht während des als Tag festgelegten Zeitintervalls zeitweise eine mit dem natürlichen Tageslicht identische Lichtfarbe aufweist, zeitweise eine höhere Lichttemperatur als das natürliche Tageslicht aufweist. Außerhalb des als Tag festgelegten Zeitintervalls wird die von der Verlaufskurve vorgegebene Lichttemperatur eingestellt. In Figur 4 ist der Verlauf der Lichttemperatur des Lichts, das von einer Ausführungsform einer erfindungsgemäßen Leuchte ausgesandt wird, über 24 Stunden hinweg dargestellt, wobei auf den in Figur 2 dargestellten Sommertag Bezug genommen wird. Die Steuerung, die bei der dargestellten Ausführungsform erfolgt, ergibt sich aus der Zusammenschau der Figuren 1 und 3. Aus der Zusammenschau der Figuren 2 und 3 ergibt sich, dass das als Tag festgelegte Zeitintervall sich an dem Sommertag gemäß Figur 4 über einen längeren Zeitraum erstreckt als das als Tag festgelegte Zeitintervall gemäß Figur 3. Wie bei Figur 3 wurde auch bei Figur 4 Anfang und Ende des als Tag festgelegten Zeitintervalls mittels Intensitätswertmessung des natürlichen Tageslichts festgelegt. Aus der Zusammenschau von Figur 2 und 3 ergibt sich, dass die Lichttemperatur des natürlichen Tageslichts während des gesamten als Tag festgelegen Zeitintervalls ununterbrochen höher ist als die Lichttemperatur der Verlaufskurve innerhalb dieses Zeitintervalls. Entsprechend wird bei dem beschriebenen Ausführungsbeispiel die von der Leuchte auszusendende Lichttemperatur während des als Tag festgelegten Zeitintervalls auf die Lichttemperatur des natürlichen Tageslichts festgelegt. Außerhalb des als Tag festgelegten Zeitintervalls wird die von der Verlaufskurve vorgegebene Lichttemperatur eingestellt.

## Patentansprüche

1. Verfahren zum Steuern einer in einem Raum angeordneten Leuchte, die zum Aussenden von Licht mit verschiedenen Lichtfarben ausgebildet ist, wobei eine Lichtfarbe des natürlichen Tageslichts tageszeitabhängig ermittelt wird und die Lichtfarbe des von der Leuchte auszusendenden Lichts in Abhängigkeit von der ermittelten Lichtfarbe des natürlichen Tageslichts eingestellt wird, wobei in einer Steuerung eine Verlaufskurve einer Lichttemperatur in Abhängigkeit von der Tageszeit gespeichert ist, wobei während einer Betriebsphase an jedem Tageszeitpunkt die von der Leuchte auszusendende Lichtfarbe in Abhängigkeit von der zu dem jeweiligen Tageszeitpunkt als Lichtfarbe des natürlichen Tageslichts ermittelten Lichtfarbe festgelegt wird, wenn der jeweilige Tageszeitpunkt innerhalb eines als Tag festgelegten Zeitintervalls liegt, wobei zwei konkrete Tageszeitpunkte als Anfang und Ende des als Tag festgelegten Zeitintervalls festgelegt werden, wobei in Abhängigkeit von einem zu dem Anfang des als Tag festgelegten Zeitintervalls ermittelten Lichttemperaturwert des natürlichen Tageslichts ein Tagesanfangslichttemperaturwert als an dem Anfang des als Tag festgelegten Zeitintervalls von der Leuchte auszusendende Lichtfarbe festgelegt wird und in Abhängigkeit von einem zu dem Ende des als Tag festgelegten Zeitintervalls ermittelten Lichttemperaturwert des natürlichen Tageslichts ein Tagesendelichttemperaturwert als an dem Ende des als Tag festgelegten Zeitintervalls von der Leuchte auszusendende Lichtfarbe festgelegt wird, wobei außerhalb des als Tag festgelegten Zeitintervalls die von der Leuchte auszusendende Lichtfarbe in Abhängigkeit von der gespeicherten Verlaufskurve festgelegt wird, wobei die Abhängigkeit von der gespeicherten Verlaufskurve so an den Tagesanfangslichttemperaturwert und an den Tagesendelichttemperaturwert angepasst wird, dass die Lichttemperatur der unmittelbar vor dem Anfang des als Tag festgelegten Zeitintervalls in Abhängigkeit von der Verlaufskurve festgelegten, von der Leuchte auszusendenden Lichtfarbe sich um weniger als 1000 K, insbesondere um weniger als 700 K, insbesondere um weniger als 500 K von dem Tagesanfangslichttemperaturwert unterscheidet und dass die Lichttemperatur der unmittelbar nach dem Ende des als Tag festgelegten Zeitintervalls in Abhängigkeit von der Verlaufskurve festgelegten, von der Leuchte auszusendenden Lichtfarbe sich um weniger als 1000 K, insbesondere um weniger als 700 K, insbesondere um weniger als 500 K von dem Tagesendelichttemperaturwert unterscheidet,
**dadurch gekennzeichnet, dass**
beim tageszeitabhängigen Ermitteln der Lichtfarbe des natürlichen Tageslichts jeweils für einen bestimmten Tageszeitpunkt eine betimmte, diesem bestimmten Tageszeitpunkt zugeordnete Lichtfarbe des natürlichen Tageslichts ermittelt wird, und
die Lichttemperatur der als von der Leuchte auszusenden festgelegten Lichtfarbe außerhalb des als Tag festgelegten Zeitintervalls einen Verlauf in Abhängigkeit von der Tageszeit aufweist, dessen über ein erstes Zeitintervall, das durch eine unmittelbar vor dem Anfang des als Tag festgelegten Zeitintervalls liegende Stunde festgelegt ist, gemittelte Steigung und/oder dessen über ein zweites Zeitintervall, das durch eine unmittelbar nach dem Ende des als Tag festgelegten Zeitintervalls liegende Stunde festgelegt ist, gemittelte Steigung mehr als das Doppelte, insbesondere mehr als das Dreifache, insbesondere mehr als das Fünffache der über einen Zeitraum gemittelten Steigung beträgt, der sich von dem Ende des als Tag festgelegten Zeitintervalls bis zum Anfang des darauffolgenden als Tag festgelegten Zeitintervalls erstreckt.

2. Verfahren nach Anspruch 1,
**dadurch gekennzeichnet, dass**
die Lichttemperatur der als von der Leuchte auszusenden festgelegten Lichtfarbe außerhalb des als Tag festgelegten Zeitintervalls einen Verlauf in Abhängigkeit von der Tageszeit aufweist, dessen über ein erstes Zeitintervall, das durch eine unmittelbar vor dem Anfang des als Tag festgelegten Zeitintervalls liegende halbe Stunde festgelegt ist, gemittelte Steigung und/oder dessen über ein zweites Zeitintervall, das durch eine unmittelbar nach dem Ende des als Tag festgelegten Zeitintervalls liegende halbe Stunde festgelegt ist, gemittelte Steigung mehr als das Doppelte, insbesondere mehr als das Dreifache, insbesondere mehr als das Fünffache der über einen Zeitraum gemittelten Steigung beträgt, der sich von dem Ende des als Tag festgelegten Zeitintervalls bis zum Anfang des darauffolgenden als Tag festgelegten Zeitintervalls erstreckt.

3. Verfahren nach einem der vorangehenden Ansprüche,
**dadurch gekennzeichnet, dass**
während des als Tag festgelegten Zeitintervalls die Lichttemperatur der von der Leuchte auszusendenden Lichtfarbe dergestalt in Abhängigkeit von der Lichttemperatur der ermittelten Lichtfarbe des natürlichen Tageslichts festgelegt wird, dass die Lichttemperatur der von der Leuchte auszusendenden Lichtfarbe durch Addition einer Basislichttemperatur mit einer Variationslichttemperatur ermittelt wird, wobei die Basislichttemperatur weniger als 4.500, insbesondere weniger als 4.000 K beträgt und wobei die Variationslichttemperatur einer um einen prozentualen Faktor reduzierten Differenz zwischen der Basislichttemperatur und der Lichttemperatur der Lichtfarbe des natürlichen Tageslichts entspricht.

4. Verfahren nach einem der vorangehenden Ansprüche,
**dadurch gekennzeichnet, dass**
immer dann, wenn die zu dem jeweiligen Tageszeitpunkt als Lichtfarbe des natürlichen Tageslichts ermittelte Lichttemperatur um mehr als einen festgelegten Grenzwert geringer ist als ein Wert der Verlaufskurve der Lichttemperatur an dem Tageszeitpunkt, die von der Leuchte auszusendende Lichtfarbe in Abhängigkeit von der Verlaufskurve festgelegt wird.

5. Verfahren nach einem der vorangehenden Ansprüche,
**dadurch gekennzeichnet, dass**
das als Tag festgelegte Zeitintervall bestimmt wird mittels Messung des Intensitätswerts des natürlichen Tageslichts, wobei ein erster Tageszeitpunkt ermittelt und als erste Uhrzeit festgelegt wird, an dem der gemessene Intensitätswert des natürlichen Tageslichts einen festgelegten Abendsintensitätswert unterschreitet, und ein zweiter Tageszeitpunkt ermittelt und als zweite Uhrzeit festgelegt wird, an dem der gemessene Intensitätswert des natürlichen Tageslichts einen festgelegten Morgensintensitätswert überschreitet, wobei insbesondere der Abendsintensitätswert und der Morgensintensitätswert auf einen Wert zwischen 100 Lux und 1.000 Lux, insbesondere zwischen 100 Lux und 500 Lux festgelegt werden, und/oder dass das als Tag festgelegte Zeitintervall bestimmt wird mittels Messung der Lichtfarbe des natürlichen Tageslichts, wobei ein dritter Tageszeitpunkt ermittelt und als dritte Uhrzeit festgelegt wird, an dem die gemessene Lichttemperatur des natürlichen Tageslichts einen festgelegten Abendslichttemperaturwert überschreitet, und ein vierter Tageszeitpunkt ermittelt und als vierte Uhrzeit festgelegt wird, an dem die gemessene Lichttemperatur des natürlichen Tageslichts einen festgelegten Morgenslichttemperaturwert überschreitet, wobei insbesondere Abendslichttemperaturwert und Morgenslichttemperaturwert auf einen Wert von mindestens 20.000 K festgelegt werden und Anfang und Ende des als Tag festgelegten Zeitintervalls nur dann mittels Ermittlung der Lichtfarbe bestimmt wird, wenn innerhalb von 24 h der Abendslichttemperaturwert und der Morgenslichttemperaturwert überschritten wird.

6. Verfahren nach Anspruch 5,
**dadurch gekennzeichnet, dass**
während einer Mehrzahl an Kalendertagen jeweils die erste und die zweite Uhrzeit bestimmt werden und/oder die dritte und die vierte Uhrzeit bestimmt werden, wobei der Anfang des als Tag festgelegten Zeitintervalls durch Mittelwertbildung über während der Mehrzahl an Kalendertagen bestimmten ersten und/oder dritten Uhrzeiten festgelegt wird und wobei das Ende des als Tag festgelegten Zeitintervalls durch Mittelwertbildung über während der Mehrzahl an Kalendertagen bestimmten zweiten und/oder vierten Uhrzeiten festgelegt wird.

7. Verfahren nach Anspruch 6,
**dadurch gekennzeichnet, dass**
diese Uhrzeiten zur Festlegung von Anfang und Ende des als Tag festgelegten Zeitintervalls für jeden Kalendertag während einer dem jeweiligen Kalendertag vorangehenden Mehrzahl an Kalendertagen bestimmt werden, wobei für unterschiedliche Kalendertage die Uhrzeiten zur Festlegung von Anfang und Ende des dem jeweiligen Kalendertag zugeordneten als Tag festgelegten Zeitintervalls während einer unterschiedlichen Mehrzahl an Kalendertagen bestimmt werden.

8. Verfahren nach einem der Ansprüche 5 bis 7,
**dadurch gekennzeichnet, dass**
ein maximaler gemessener Intensitätswert eines über einen Zeitraum hinweg ermittelten Intensitätswertverlaufs des natürlichen Tageslichts ermittelt wird und der Abendsintensitätswert und/oder der Morgensintensitätswert aus einem festgelegten Verhältnis zu dem maximalen gemessenen Intensitätswert ermittelt werden.

9. Verfahren nach einem der vorangehenden Ansprüche,
**dadurch gekennzeichnet, dass**
in der Steuerung die jeweils aktuelle Tageszeit anhand eines Zeitzählers bestimmt wird, der die jeweils aktuelle Tageszeit durch Zeitzählung ausgehend von einem Tageszeitreferenzwert bestimmt, wobei insbesondere der Tageszeitreferenzwert aus dem gemessenen Verlauf des Intensitätswerts des natürlichen Tageslichts und/oder aus dem gemessenen Verlauf der Lichttemperatur des natürlichen Tageslichts in der Steuerung selbst bestimmt wird.

10. Verfahren nach einem der vorangehenden Ansprüche,
**dadurch gekennzeichnet, dass**
die Verlaufskurve der Lichttemperatur Werte für die Lichttemperatur angibt, die während des als Tag festgelegten Zeitintervalls mit der Tageszeit variieren und insbesondere auch außerhalb des als Tag festgelegten Zeitintervalls mit der Tageszeit variieren.

11. Verfahren nach einem der vorangehenden Ansprüche,
**dadurch gekennzeichnet, dass**
während einer Inbetriebnahmephase der Leuchte die von der Leuchte auszusendende Lichtfarbe ohne Berücksichtigung der von der Verlaufskurve vorgegebenen Abhängigkeit der Lichttemperatur festgelegt wird und die Betriebsphase erst begonnen wird, wenn in der Steuerung Anfang und Ende des als Tag festgelegten Zeitintervalls definiert sind, wobei insbesondere Anfang und Ende des als Tag festgelegten Zeitintervalls durch die Steuerung selbst ermittelt werden.

12. Verfahren nach einem der vorangehenden Ansprüche,
**dadurch gekennzeichnet, dass**
die Lichtfarbe und die Intensität des natürlichen Tageslichts mittels zumindest eines räumlich von einem Leuchtengehäuse der Leuchte entfernten Sensors gemessen werden und ausgehend von dem zumindest einen Sensor als Messdaten über eine Datenverbindung, insbesondere drahtlose Datenverbindung, an die Steuerung übermittelt werden, und
dass
die Messdaten in einer Datenbank abgelegt werden und von der Steuerung über die Datenverbindung abgerufen werden.

13. Verfahren nach Anspruch 12,
**dadurch gekennzeichnet, dass**
mehrere Gruppen an Sensoren vorgesehen werden, wobei jeder Gruppe an Sensoren ein bestimmter Ort zugeordnet wird und in der Datenbank für jeden Ort ein Datensatz aus Messdaten abgelegt wird, die von der dem jeweiligen Ort zugeordneten Gruppe an Sensoren gemessen wurden, wobei der Leuchte ein bestimmter Ort zugeordnet wird und die von der Leuchte auszusendende Lichtfarbe in Abhängigkeit von den Messdaten festgelegt wird, die von der diesem Ort zugeordneten Gruppe an Sensoren gemessen wurden.

14. Steuereinheit umfassend einen Speicher und einen Prozessor sowie zumindest eine erste Schnittstelle zum Empfangen von Daten, die die Lichtfarbe des natürlichen Tageslichts kennzeichnen, und eine zweite Schnittstelle zum Ausgeben von Ansteuerungsdaten zur Steuerung der Leuchte, wobei die Steuereinheit dazu eingerichtet ist, das Verfahren nach einem der vorangehenden Ansprüche durchzuführen.

15. System zum Steuern einer Leuchte, das System umfassend mehrere Gruppen an Sensoren, einen Prozessor sowie eine Datenbank, wobei jeder Gruppe an Sensoren ein bestimmter Ort zugeordnet ist und die Sensoren mit der Datenbank verbunden sind zum Ausgeben der von ihnen gemessenen Messdaten zum Erzeugen eines Datensatzes aus Messdaten für jeden Ort, wobei der Leuchte ein bestimmter Ort zugeordnet werden kann und der Prozessor dazu eingerichtet ist, die von der Leuchte auszusendende Lichtfarbe auf Basis eines für diesen bestimmten Ort erzeugten Datensatzes gemäß einem Verfahren der Ansprüche 1 bis 13 festzulegen.

## Claims

1. Method for controlling a luminaire which is arranged in a room and is designed to emit light with different light colors, a light color of the natural daylight being determined as a function of the time of day, and the light color of the light to be emitted by the luminaire being set as a function of the determined light color of the natural daylight, wherein a progression curve of a light temperature as a function of the time of day is stored in a controller, wherein during an operating phase at each time of day the light color to be emitted by the luminaire is set as a function of the light color determined as the light color of the natural daylight at the respective time of day, if the respective time of day lies within a time interval set as day, two concrete times of day being set as the beginning and end of the time interval set as a day, wherein in dependence on a light temperature value of the natural daylight determined at the beginning of the time interval set as day, a day start light temperature value is set as a light color to be emitted by the luminaire at the beginning of the time interval set as day, and in dependence on a light temperature value of the natural daylight determined at the end of the time interval set as day, a day end light temperature value is set as a light color to be emitted by the luminaire at the end of the time interval set as a day, wherein outside the time interval set as day, the light color to be emitted by the luminaire is determined as a function of the stored progression curve, wherein the dependence on the stored progression curve is adapted to the day start light temperature value and to the day end light temperature value in such a way that the light temperature of the light color in dependence on the progression curve immediately before the start of the time interval set as day and to be emitted by the luminaire differs from the day start light temperature value by less than 1000 K, in particular by less than 700 K, in particular by less than 500 K, and in that the light temperature of the light color set in dependence on the progression curve immediately after the end of the time interval set as day and to be emitted by the luminaire differs from the day end light temperature value by less than 1000 K, in particular by less than 700 K, in particular by less than 500 K,
**characterized in that**
when determining the light color of the natural daylight as a function of the time of day, for a specific time of day, in each case, a specific light color of the natural daylight associated with this specific time of day is determined,
and **in that** the light temperature of the light color set to be emitted by the luminaire has, outside the time interval determined to be day, a progression curve as a function of the time of day, the gradient of which averaged over a first time interval, which is set by one hour lying immediately before the beginning of the time interval set as day, and/or the gradient of which averaged over a second time interval, which is set by one hour lying immediately after the end of the time interval set as day, is more than twice, in particular more than three times, in particular more than five times, the gradient averaged over a period of time which extends from the end of the time interval set as day to the beginning of the subsequent time interval set as day.

2. Method according to claim 1,
**characterized in that**
the light temperature of the light color set to be emitted by the luminaire has, outside the time interval set as day, a progression curve as a function of the time of day, the gradient of which averaged over a first time interval, which is set by a half hour immediately preceding the beginning of the time interval set as day, and/or the gradient of which averaged over a second time interval, which is set by a half hour lying immediately after the end of the time interval set as day, is more than twice, in particular more than three times, in particular more than five times, the gradient averaged over a period of time which extends from the end of the time interval set as day to the beginning of the subsequent time interval set as day.

3. Method according to any one of the preceding claims,
**characterized in that**,
during the time interval set as day, the light temperature of the light color to be emitted by the luminaire is set as a function of the light temperature of the determined light color of the natural daylight in such a way that the light temperature of the light color to be emitted by the luminaire is determined by adding a basic light temperature to a variation light temperature, the basic light temperature being less than 4,500 K, in particular less than 4,000 K, and wherein the variation light temperature corresponds to a difference, reduced by a percentage factor, between the base light temperature and the light temperature of the light color of natural daylight.

4. Method according to any one of the preceding claims, **characterized in that**
whenever the light temperature determined as the light color of the natural daylight at the respective time of day is lower by more than a fixed limit value than a value of the progression curve of the light temperature at the time of day, the light color to be emitted by the luminaire is set as a function of the course curve.

5. Method according to any one of the preceding claims, **characterized in that**
the time interval set as day is determined by measuring the intensity value of the natural daylight, wherein a first time of day is determined and set as a first clock time at which the measured intensity value of the natural daylight falls below a set evening intensity value, and a second time of day is determined and set as a second clock time at which the measured intensity value of the natural daylight exceeds a set morning intensity value, wherein in particular the evening intensity value and the morning intensity value are set to a value between 100 lux and 1,000 lux, in particular between 100 lux and 500 lux, and/or that the time interval set as day is determined by means of measuring the light color of the natural daylight, wherein a third time of day is determined and set as a third clock time at which the measured light temperature of the natural daylight exceeds a set evening light temperature value, and a fourth time of day is determined and set as a fourth clock time at which the measured light temperature of the natural daylight exceeds a set morning light temperature value, wherein in particular the evening light temperature value and the morning light temperature value are set to a value of at least 20,000 K and the beginning and end of the time interval set as day are determined by determining the light color only if the evening light temperature value and the morning light temperature value are exceeded within 24 hours.

6. Method according to claim 5,
**characterized in that**
during a plurality of calendar days, in each case the first and the second clock times are determined and/or the third and the fourth clock times are determined, the beginning of the time interval set as day being determined by averaging over first and/or third clock times determined during the plurality of calendar days, and the end of the time interval set as day being determined by averaging over second and/or fourth clock times determined during the plurality of calendar days.

7. Method according to claim 6,
**characterized in that**
these clock times for defining the beginning and end of the time interval set as a day are determined for each calendar day during a plurality of calendar days preceding the respective calendar day, wherein for different calendar days the clock times for defining the beginning and end of the time interval assigned to the respective calendar day and set as day are determined during a different plurality of calendar days.

8. Method according to any one of claims 5 to 7,
**characterized in that**
a maximum measured intensity value of an intensity value curve of the natural daylight determined over a period of time is determined, and the evening intensity value and/or the morning intensity value are determined from a fixed ratio to the maximum measured intensity value.

9. Method according to any one of the preceding claims, **characterized in that**
in the controller, the respective current time of day is determined on the basis of a time counter which determines the respective current time of day by time counting on the basis of a daytime reference value, the daytime reference value being determined in particular from the measured progression curve of the intensity value of the natural daylight and/or from the measured progression curve of the light temperature of the natural daylight in the controller itself.

10. Method according to any one of the preceding claims, **characterized in that**
the progression curve of the light temperature indicates values for the light temperature which vary with the time of day during the time interval set as day and, in particular, also vary with the time of day outside the time interval set as day.

11. Method according to any one of the preceding claims, **characterized in that**
during a start-up phase of the luminaire, the light color to be emitted by the luminaire is set without taking into account the dependence of the light temperature predefined by the progression curve, and the operating phase is not started until the beginning and end of the time interval determined as a day are defined in the controller, the beginning and end of the time interval set as day in particular being determined by the controller itself.

12. Method according to any one of the preceding claims, **characterized in that**
the light color and the intensity of the natural daylight are measured by means of at least one sensor spatially remote from a luminaire housing of the luminaire and, based on the at least one sensor, are transmitted as measurement data to the controller via a data link, in particular a wireless data link, and **in that** the measurement data are stored in a database and are retrieved by the controller via the data link.

13. Method according to claim 12,
**characterized in that**
several groups of sensors are provided, each group of sensors being assigned a specific location, and a data record of measurement data measured by the group of sensors assigned to the respective location being stored in the database for each location, the luminaire being assigned a specific location, and the light color to be emitted by the luminaire being set as a function of the measurement data measured by the group of sensors assigned to this location.

14. Control unit comprising a memory and a processor and at least a first interface for receiving data characterizing the light color of the natural daylight and a second interface for outputting control data for controlling the luminaire, wherein the control unit is adapted to perform the method according to any of the preceding claims.

15. System for controlling a luminaire, the system comprising several groups of sensors, a processor, and a database, each group of sensors being assigned a particular location and the sensors being connected to the database for outputting measurement data measured by them for generating a data set of measurement data for each location, wherein the luminaire can be assigned a particular location and the processor is configured to determine the light color to be emitted by the luminaire on the basis of a data set generated for that particular location according to a method of claims 1 to 13.

## Revendications

1. Procédé de commande d'un luminaire disposé dans une pièce et conçu pour émettre de la lumière de différentes couleurs, une couleur de lumière de la lumière naturelle du jour étant déterminée en fonction de l'heure du jour et la couleur de lumière de la lumière à émettre par le luminaire étant réglée en fonction de la couleur de lumière déterminée de la lumière naturelle du jour, une trajectoire d'une température de lumière en fonction de l'heure du jour étant mémorisée dans un dispositif de commande, la couleur de lumière à émettre par le luminaire étant fixée pendant une phase de fonctionnement à chaque moment du jour en fonction de la couleur de lumière déterminée à ce moment du jour comme couleur de lumière de la lumière naturelle du jour, si le moment du jour respectif se situe à l'intérieur d'un intervalle de temps défini comme jour, deux moments concrets du jour étant définis comme début et fin de l'intervalle de temps défini comme jour, dans lequel, en fonction d'une valeur de température de lumière de la lumière naturelle du jour déterminée au début de l'intervalle de temps défini comme jour, une valeur de température de lumière de début de jour est déterminée comme couleur de lumière à émettre par le luminaire au début de l'intervalle de temps défini comme jour et, en fonction d'une valeur de température de lumière de la lumière naturelle du jour déterminée à la fin de l'intervalle de temps défini comme jour, une valeur de température de lumière de fin de jour est déterminée comme couleur de lumière à émettre par le luminaire à la fin de l'intervalle de temps défini comme jour, en dehors de l'intervalle de temps défini comme jour, la couleur de lumière à émettre par le luminaire est définie en fonction de la trajectoire mémorisée, la dépendance de la trajectoire mémorisée étant adaptée à la valeur de température de lumière de début de jour et à la valeur de température de lumière de fin de jour de telle sorte que la température de lumière de la couleur de lumière à émettre par le luminaire juste avant le début de l'intervalle de temps défini comme jour étant déterminée en fonction de la trajectoire, se distingue de la valeur de température de lumière de début de jour de moins de 1000 K, en particulier de moins de 700 K, en particulier de moins de 500 K, et que la température de lumière de la couleur de lumière à émettre par le luminaire, immédiatement après la fin de l'intervalle de temps défini comme jour étant déterminée en fonction de la trajectoire se distingue de la valeur de température de lumière de fin de jour de moins de 1000 K, en particulier de moins de 700 K, en particulier de moins de 500 K,
**caractérisé en ce que**
lors de la détermination de la couleur de lumière de la lumière naturelle du jour en fonction de l'heure du jour, on détermine à chaque fois pour un moment déterminé du jour une couleur de lumière déterminée de la lumière naturelle du jour, associée à ce moment déterminé du jour, et
la température de lumière de la couleur de lumière à émettre par le luminaire, en dehors de l'intervalle de temps défini comme jour, suivit une trajectoire en fonction de l'heure du jour, dont la pente moyenne, qui est calculée sur un premier intervalle de temps qui est défini par une heure située immédiatement avant le début de l'intervalle de temps défini comme jour et/ou dont la pente moyenne, qui est calculée sur un deuxième intervalle de temps qui est défini par une heure située immédiatement après la fin de l'intervalle de temps défini comme jour, est supérieure au double, en particulier au triple, en particulier au quintuple de la pente moyenne sur une période qui s'étend de la fin de l'intervalle de temps défini comme jour jusqu'au début de l'intervalle de temps suivant défini comme jour.

2. Procédé selon la revendication 1,
**caractérisé en ce que**
la température de lumière de la couleur de lumière à émettre par le luminaire en dehors de l'intervalle de temps défini comme jour, suivit une trajectoire en fonction de l'heure du jour dont la pente, qui est calculée en moyenne sur un premier intervalle de temps défini par une demi-heure précédant immédiatement le début de l'intervalle de temps défini comme jour, et/ou dont la pente, qui est calculée en moyenne sur un deuxième intervalle de temps, qui est défini par une demi-heure située immédiatement après la fin de l'intervalle de temps défini comme jour, est supérieure au double, en particulier au triple, en particulier au quintuple de la pente moyenne calculée sur une période qui s'étend de la fin de l'intervalle de temps défini comme jour jusqu'au début de l'intervalle de temps suivant défini comme jour.

3. Procédé selon l'une des revendications précédentes, **caractérisé en ce que**,
pendant l'intervalle de temps défini comme jour, la température de lumière de la couleur de lumière à émettre par le luminaire est définie en fonction de la température de lumière de la couleur de lumière déterminée de la lumière naturelle du jour, de telle sorte que la température de lumière de la couleur de lumière à émettre par le luminaire est déterminée par addition d'une température de lumière de base avec une température de lumière de variation, la température de lumière de base étant inférieure à 4.500, en particulier moins de 4.000 K, et la température de lumière de variation correspondant à une différence, réduite d'un facteur en pourcentage, entre la température de lumière de base et la température de lumière de la couleur de lumière de la lumière naturelle du jour.

4. Procédé selon l'une des revendications précédentes, **caractérisé en ce que**
chaque fois que la température de lumière déterminée à l'instant donné du jour comme couleur de lumière de la lumière naturelle du jour est inférieure de plus d'une valeur limite déterminée à une valeur de la trajectoire de la température de lumière à l'instant donné du jour, la couleur de lumière à émettre par le luminaire est déterminée en fonction de la trajectoire.

5. Procédé selon l'une des revendications précédentes, **caractérisé en ce que**
l'intervalle de temps défini comme jour est déterminé au moyen de la mesure de la valeur d'intensité de la lumière naturelle du jour, un premier moment du jour étant déterminé et défini comme première heure à laquelle la valeur d'intensité mesurée de la lumière naturelle du jour est inférieure à une valeur d'intensité du soir définie, et un deuxième moment du jour étant déterminé et défini comme deuxième heure à laquelle la valeur d'intensité mesurée de la lumière naturelle du jour est supérieure à une valeur d'intensité du matin définie, la valeur d'intensité du soir et la valeur d'intensité du matin étant notamment fixées à une valeur comprise entre 100 lux et 1.000 lux, en particulier entre 100 lux et 500 lux, et/ou **en ce que** l'intervalle de temps fixé comme jour est déterminé au moyen de la mesure de la couleur de lumière de la lumière naturelle du jour, un troisième moment du jour étant déterminé et fixé comme troisième heure, auquel la température de lumière mesurée de la lumière naturelle du jour dépasse une valeur de température de lumière du soir fixée, et un quatrième moment du jour est déterminé et fixé comme quatrième heure, auquel la température de lumière mesurée de la lumière naturelle du jour dépasse une valeur de température de lumière du matin fixée, la valeur de température de lumière du soir et la valeur de température de lumière du matin étant notamment fixées à une valeur d'au moins 20.000 K et le début et la fin de l'intervalle de temps défini comme jour ne sont déterminés par la détermination de la couleur de la lumière que si la valeur de température de la lumière du soir et la valeur de température de la lumière du matin sont dépassées en l'espace de 24 h.

6. Procédé selon la revendication 5,
**caractérisé en ce que**
pendant une pluralité de jours calendaires, la première et la deuxième heure sont déterminées et/ou la troisième et la quatrième heure sont déterminées, le début de l'intervalle de temps défini comme jour étant déterminé par calcul de la moyenne sur la première et/ou la troisième heure déterminées pendant la pluralité de jours calendaires et la fin de l'intervalle de temps défini comme jour étant déterminée par calcul de la moyenne sur la deuxième et/ou la quatrième heure déterminées pendant la pluralité de jours calendaires.

7. Procédé selon la revendication 6,
**caractérisé en ce que**
ces heures pour déterminer le début et la fin de l'intervalle de temps défini comme jour sont déterminées pour chaque jour calendaire pendant une pluralité de jours calendaires précédant le jour calendaire respectif, les heures pour déterminer le début et la fin de l'intervalle de temps défini comme jour associé au jour calendaire respectif étant déterminées pour différents jours calendaires pendant une pluralité différente de jours calendaires.

8. Procédé selon l'une des revendications 5 à 7,
**caractérisé en ce que**
une valeur d'intensité maximale mesurée d'une trajectoire d'intensité de la lumière naturelle du jour déterminée sur une période de temps est déterminée et la valeur d'intensité du soir et/ou la valeur d'intensité du matin sont déterminées à partir d'un rapport défini avec la valeur d'intensité maximale mesurée.

9. Procédé selon l'une des revendications précédentes, **caractérisé en ce que**
dans le dispositif de commande, l'heure actuelle du jour est déterminée à l'aide d'un compteur de temps qui détermine l'heure actuelle du jour par comptage du temps à partir d'une valeur de référence de l'heure du jour, la valeur de référence de l'heure du jour étant notamment déterminée à partir de la trajectoire mesurée de la valeur d'intensité de la lumière naturelle du jour et/ou de la trajectoire mesurée de la température de la lumière naturelle du jour dans le dispositif de commande il-même.

10. Procédé selon l'une des revendications précédentes, **caractérisé en ce que**
la trajectoire de la température de la lumière indique des valeurs pour la température de la lumière qui varient avec l'heure du jour pendant l'intervalle de temps défini comme jour et qui varient en particulier également avec l'heure du jour en dehors de l'intervalle de temps défini comme jour.

11. Procédé selon l'une des revendications précédentes, **caractérisé en ce que**
pendant une phase de mise en service du luminaire, la couleur de lumière à émettre par le luminaire est déterminée sans tenir compte de la dépendance de la température de lumière prédéfinie par la trajectoire et la phase de fonctionnement ne commence que lorsque le début et la fin de l'intervalle de temps défini comme jour sont définis dans le dispositif de commande, le début et la fin de l'intervalle de temps défini comme jour étant notamment déterminés par le dispositif de commande il-même.

12. Procédé selon l'une des revendications précédentes, **caractérisé en ce que**
la couleur de la lumière et l'intensité de la lumière naturelle sont mesurées au moyen d'au moins un capteur éloigné dans l'espace d'un boîtier de luminaire du luminaire et, à partir de l'au moins un capteur, sont transmises au dispositif de commande en tant que données de mesure par l'intermédiaire d'une liaison de données, en particulier une liaison de données sans fil, et **en ce que** les données de mesure sont stockées dans une base de données et sont récupérées par le dispositif de commande par l'intermédiaire de la liaison de données.

13. Procédé selon la revendication 12,
**caractérisé en ce que**
plusieurs groupes de capteurs sont prévus, un lieu déterminé étant attribué à chaque groupe de capteurs et un ensemble de données constitué de données de mesure qui ont été mesurées par le groupe de capteurs attribué au lieu respectif étant stocké dans la base de données pour chaque lieu, un lieu déterminé étant attribué au luminaire et la couleur de lumière à émettre par le luminaire étant déterminée en fonction des données de mesure qui ont été mesurées par le groupe de capteurs attribué à ce lieu.

14. Unité de commande comprenant une mémoire et un processeur ainsi qu'au moins une première interface pour recevoir des données caractérisant la couleur de la lumière naturelle du jour et une deuxième interface pour émettre des données de commande pour commander le luminaire, l'unité de commande étant agencée pour mettre en œuvre le procédé selon l'une des revendications précédentes.

15. Système de commande d'un luminaire, le système comprenant plusieurs groupes de capteurs, un processeur ainsi qu'une base de données, chaque groupe de capteurs étant associé à un lieu déterminé et les capteurs étant reliés à la base de données pour délivrer les données de mesure qu'ils mesurent afin de générer un ensemble de données de mesure pour chaque lieu, le luminaire pouvant être associé à un lieu déterminé et le processeur étant agencé pour déterminer la couleur de lumière à émettre par le luminaire sur la base d'un ensemble de données généré pour ce lieu déterminé selon un procédé des revendications 1 à 13.
